# EUROPEAN PATENT APPLICATION

(11) **EP 4 622 375 A1**
(43) Date of publication of application: **24.09.2025**
(21) Application number: 23891396.6
(22) Date of filing: 06.11.2023
(51) Int. Cl.: H04W 72/20, H04W 16/28

(54) **TERMINAL, WIRELESS COMMUNICATION METHOD, AND BASE STATION**

(30) Priority: 14.11.2022 JP 2022182134
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2023/039841
(87) International publication number: WO 2024/106244

(57) **Abstract**

A terminal according to one aspect of the present disclosure includes a receiving section that receives information indicating a unified transmission configuration indication (TCI) state and one piece of downlink control information indicating a plurality of UL transmissions, and a control section that determines a unified TCI state to be applied to the plurality of UL transmissions, based on at least one of information indicated by the downlink control information, a transmission/reception point (TRP) index corresponding to the UL transmission, and a control resource set pool index corresponding to the UL transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption / Transmission Configuration Indication (TCI) state / spatial relation).

It is studied that a configured/activated/indicated transmission configuration indication state (TCI state) is applied to a plurality of types of signals (channels/RSs). However, there is a case where a method for applying the TCI state is indefinite. Unless a method for indicating the TCI state is definite, degradation in communication quality, throughput reduction, and the like may occur.

Thus, an object of the present disclosure is to provide a terminal, a radio communication method, and a base station that can appropriately control communication even when a transmission configuration indication state (TCI state) applied to a plurality of types of signals (channels/RSs) is supported.

### Solution to Problem

A terminal according to one aspect of the present disclosure includes a receiving section that receives information indicating a unified transmission configuration indication (TCI) state and one piece of downlink control information indicating a plurality of UL transmissions, and a control section that determines a unified TCI state to be applied to the plurality of UL transmissions, based on at least one of information indicated by the downlink control information, a transmission/reception point (TRP) index corresponding to the UL transmission, and a control resource set pool index corresponding to the UL transmission.

### Advantageous Effects of Invention

According to one aspect of the present disclosure, it is possible to appropriately control communication even when a transmission configuration indication state (TCI state) applied to a plurality of types of signals (channels/RSs) is supported.

### Brief Description of Drawings

[FIG. 1] FIGS. 1A and 1B are diagrams to show examples of a unified/common TCI framework.
[FIG. 2] FIGS. 2A and 2B are diagrams to show examples of DCI based TCI state indication.
[FIG. 3] FIG. 3 is a diagram to show an example of application time for unified TCI state indication.
[FIG. 4] FIGS. 4A to 4D are diagrams to show examples of multi-TRP.
[FIG. 5] FIGS. 5A and 5B are diagrams to show examples of a method for beam indication for multi-TRP.
[FIG. 6] FIGS. 6A and 6B show examples of a unified/common TCI framework in a case where a CORESET pool index is configured.
[FIG. 7] FIG. 7 shows an example of a problem of application of a unified/common TCI framework for a UL channel/signal or DL reference signal in a case where a CORESET pool index is configured.
[FIG. 8] FIG. 8 is a diagram to show an example of a method for determining a unified/common TCI state in single-DCI based UL transmission, according to a first embodiment.
[FIG. 9] FIG. 9 is a diagram to show an example of correspondence between an SRS resource (set) and a TCI state, according to the first embodiment.
[FIG. 10] FIG. 10 is a diagram to show another example of the correspondence between an SRS resource (set) and a TCI state, according to the first embodiment.
[FIG. 11] FIG. 11 is a diagram to show another example of the correspondence between an SRS resource (set) and a TCI state, according to the first embodiment.
[FIG. 12] FIG. 12 is a diagram to show an example of a method for determining a unified/common TCI state in a case where a CORESET pool index is configured, according to a second embodiment.
[FIG. 13] FIG. 13 is a diagram to show an example of a timing advance group (TAG) to which a cell included in a cell group belongs.
[FIG. 14] FIG. 14 is a diagram to show an example of a MAC CE for a timing advance command.
[FIG. 15] FIG. 15 is a diagram to show an example of a method for determining a unified/common TCI state and a TAG in a case where a CORESET pool index is configured, according to a third embodiment.
[FIG. 16] FIG. 16 is a diagram to show an example of a method for determining an SRS resource in UL transmission (for example, PUSCH transmission), according to a fourth embodiment.
[FIG. 17] FIG. 17 is a diagram to show another example of the method for determining an SRS resource in UL transmission (for example, PUSCH transmission), according to the fourth embodiment.
[FIG. 18] FIG. 18 is a diagram to show another example of the method for determining an SRS resource in UL transmission (for example, PUSCH transmission), according to the fourth embodiment.
[FIG. 19] FIGS. 19A and 19B are diagrams to show an example of joint ACK/NACK feedback and an example of separate ACK/NACK feedback, respectively.
[FIG. 20] FIG. 20 is a diagram to show an example of a PUCCH resource configuration method according to the fourth embodiment.
[FIG. 21] FIG. 21 is a diagram to show another example of the PUCCH resource configuration method according to the fourth embodiment.
[FIG. 22] FIG. 22 is a diagram to show another example of the PUCCH resource configuration method according to the fourth embodiment.
[FIG. 23] FIG. 23 is a diagram to show another example of the PUCCH resource configuration method according to the fourth embodiment.
[FIG. 24] FIG. 24 is a diagram to show another example of the PUCCH resource configuration method according to the fourth embodiment.
[FIG. 25] FIG. 25 is a diagram to show another example of the PUCCH resource configuration method according to the fourth embodiment.
[FIG. 26] FIG. 26 is a diagram to show an example of a schematic structure of a radio communication system according to one embodiment.
[FIG. 27] FIG. 27 is a diagram to show an example of a structure of a base station according to one embodiment.
[FIG. 28] FIG. 28 is a diagram to show an example of a structure of a user terminal according to one embodiment.
[FIG. 29] FIG. 29 is a diagram to show an example of a hardware structure of the base station and the user terminal according to one embodiment.
[FIG. 30] FIG. 30 is a diagram to show an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### {Physical Layer Procedure / Antenna Port QCL for Data}

The UE can be configured with a list of up to M TCI-State (TCI state) configurations in a higher layer parameter "PDSCH-Config" for decoding of a PDSCH, in accordance with a detected PDCCH with DCI for the UE and a given serving cell. Here, M depends on a UE capability "maxNumberConfiguredTCIstatesPerCC."

Each TCI-State includes a parameter for configuration of a QCL relationship between one or two downlink reference signals and a DMRS port for a PDSCH, a DMRS port for a PDCCH, or a CSI-RS port for a CSI-RS resource. The QCL relationship is configured by a higher layer parameter "qcl-Type1" for a first DL RS and a higher layer parameter "qcl-Type2" for a second DL RS (if configured).

In a case of two DL RSs, a plurality of QCL types are not the same irrespective of whether reference is reference to the same DL RS or reference to different DL RSs. A QCL type corresponding to each DL RS is given by a higher layer parameter "qcl-Type" in QCL-Info, and takes one of the following values.
- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

### {RRC Protocol Specification / RRC IE / TCI State}

A TCI-State (TCI state) associates one or two DL reference signals (RSs) with a corresponding QCL type. If an additional physical cell identifier (PCI) is configured for the RS, the same value is configured for both of the DL RSs.

### (Default TCI State / Default Spatial Relation / Default PL-RS)

In Rel. 16, the PDSCH may be scheduled by DCI having a TCI field. A TCI state for the PDSCH is indicated by the TCI field. The TCI field in DCI format 1_1 has 3 bits, and the TCI field in DCI format 1_2 has up to 3 bits.

In an RRC connected mode, if a first element of information of TCI in DCI (higher layer parameter "tci-PresentInDCI") is set to "enabled" for a CORESET for scheduling the PDSCH, the UE assumes that the TCI field is present in DCI format 1_1 for a PDCCH transmitted in the CORESET.

If a second element of information of TCI in DCI (higher layer parameter "tci-PresentInDCI-1-2") for a CORESET for scheduling the PDSCH is configured for the UE, the UE assumes that the TCI field having a DCI field size indicated by the second element of the information of TCI in DCI is present in DCI format 1_2 for a PDSCH transmitted in the CORESET.

In Rel. 16, the PDSCH may be scheduled by DCI not having the TCI field. A DCI format of the DCI may be DCI format 1_0 or DCI format 1_1/1_2 in a case where an element of information of TCI in DCI (higher layer parameter "tci-PresentInDCI" or "tci-PresentInDCI-1-2") is not configured (enabled). When the PDSCH is scheduled by the DCI not having the TCI field and if a time offset between reception of DL DCI (DCI for scheduling a PDSCH (scheduling DCI)) and a corresponding PDSCH (PDSCH scheduled by the DCI) is greater than or equal to a threshold (timeDurationForQCL), the UE assumes that a TCI state or QCL assumption for the PDSCH is the same as a TCI state or QCL assumption (default TCI state) for the CORESET (for example, the scheduling DCI).

In an RRC connected mode, in both a case where an element of information of TCI in DCI (higher layer parameter tci-PresentInDCI and tci-PresentInDCI-1-2) is set as "enabled" and a case where the element of the information of TCI in DCI is not configured, when a time offset between reception of DL DCI (DCI for scheduling a PDSCH) and the corresponding PDSCH (PDSCH scheduled by the DCI) is less than a threshold (timeDurationForQCL) (application condition, first condition), the TCI state (default TCI state) of the PDSCH may be the TCI state corresponding to the lowest CORESET ID in the latest slot in an active DL BWP in the CC (of a specific UL signal) if non-cross carrier scheduling is performed. Otherwise, the TCI state (default TCI state) of the PDSCH may be the TCI state of the lowest TCI state ID of the PDSCHs in the active DL BWP in a scheduled CC.

In Rel. 15, separate MAC CEs, specifically, a MAC CE for activation/deactivation of a PUCCH spatial relation and a MAC CE for activation/deactivation of an SRS spatial relation, are needed. The PUSCH spatial relation follows the SRS spatial relation.

In Rel. 16, at least one of a MAC CE for activation/deactivation of a PUCCH spatial relation and a MAC CE for activation/deactivation of an SRS spatial relation need not necessarily be used.

If neither a spatial relation nor a PL-RS for a PUCCH is configured in FR2 (application condition, second condition), default assumptions of a spatial relation and a PL-RS (default spatial relation and default PL-RS) are used for the PUCCH. If neither a spatial relation nor a PL-RS for an SRS (SRS resource for the SRS or SRS resource corresponding to an SRI in DCI format 0_1 for scheduling a PUSCH) is configured in FR2 (application condition, second condition), the default assumptions of a spatial relation and a PL-RS (default spatial relation and default PL-RS) are used for the PUSCH scheduled by DCI format 0_1 and the SRS.

If a CORESET is configured in the active DL BWP in the CC (application condition), the default spatial relation and the default PL-RS may be the TCI state or the QCL assumption of the CORESET having the lowest CORESET ID in the active DL BWP. If no CORESET is configured in the active DL BWP in the CC, the default spatial relation and the default PL-RS may be the active TCI state having the lowest ID of the PDSCHs in the active DL BWP.

In Rel. 15, the spatial relation of a PUSCH scheduled in DCI format 0_0 follows the spatial relation of the PUCCH resource having the lowest PUCCH resource ID among active spatial relations of the PUCCHs in the same CC. Even when no PUCCH is transmitted in an SCell, a network need update all the PUCCH spatial relations in the SCell.

In Rel. 16, no PUCCH configuration for a PUSCH scheduled by DCI format 0_0 is needed. When no active PUCCH spatial relation is present or no PUCCH resource is present for a PUSCH scheduled by DCI format 0_0 in the active UL BWP in the CC (application condition, second condition), the default spatial relation and the default PL-RS are used for the PUSCH.

An application condition of a default spatial relation / default PL-RS for SRS may include an enable default beam pathloss for SRS information element (higher layer parameter enableDefaultBeamPlForSRS) is set as enabled. An application condition of a default spatial relation / default PL-RS for PUCCH may include an enable default beam pathloss for PUCCH information element (higher layer parameter enableDefaultBeamPlForPUCCH) is set as enabled. An application condition of a default spatial relation / default PL-RS for PUSCH scheduled by DCI format 0_0 may include an enable default beam pathloss for PUSCH scheduled by DCI format 0_0 information element (higher layer parameter enableDefaultBeamPlForPUSCH0_0) is set as enabled.

In Rel. 16, when an RRC parameter (parameter for enabling a default beam PL for PUCCH) (enableDefaultBeamPL-ForPUCCH), parameter for enabling a default beam PL for PUSCH) (enableDefaultBeamPL-ForPUSCH0_0), or parameter for enabling a default beam PL for SRS) (enableDefaultBeamPL-ForSRS)) is configured for the UE, and a spatial relation or a PL-RS is not configured for the UE, the UE applies a default spatial relation / PL-RS.

The threshold may be referred to as time duration for QCL, "timeDurationForQCL," "Threshold," "Threshold for offset between a DCI indicating a TCI state and a PDSCH scheduled by the DCI," "Threshold-Sched-Offset," "beamSwitchTiming," a schedule offset threshold, a scheduling offset threshold, and the like. The above threshold may be reported by the UE as a UE capability (for each subcarrier spacing).

When offset (scheduling offset) between reception of DL DCI and a PDSCH corresponding to the DL DCI is less than a threshold "timeDurationForQCL," at least one TCI state configured for a serving cell with a scheduled PDSCH includes "QCL type **D,"** the UE is configured with an information element for enabling 2 default TCIs (enableTwoDefaultTCIStates-r16), and at least one TCI codepoint (codepoint of a TCI field in the DL DCI) indicates two TCI states, the UE assumes that a DMRS port for the PDSCH or PDSCH transmission occasion in the serving cell is QCLed (quasi co-located) with an RS related to a QCL parameter associated with two TCI states corresponding to the lowest codepoint of TCI codepoints including two different TCI states (2 default QCL assumption determination rule). The information element for enabling 2 default TCIs indicates that Rel-16 operation with two default TCI states for PDSCH in a case where at least one TCI codepoint is mapped to two TCI states is enabled.

As a default TCI state of a PDSCH in Rel. 15/16, specifications of a default TCI state for single TRP, a default TCI state for multi-DCI-based multi-TRP, and a default TCI state for single DCI-based multi-TRP have been drafted.

As a default TCI state of an aperiodic CSI-RS (A (aperiodic)-CSI-RS) in Rel. 15/16, specifications of a default TCI state for single TRP, a default TCI state for multi-DCI-based multi-TRP, and a default TCI state for single DCI-based multi-TRP have been drafted.

In Rel. 15/16, specifications of default spatial relations and default PL-RSs for respective ones of PUSCH/PUCCH/SRS have been drafted.

### (Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL. Which of a joint TCI state or a separate TCI state is to be applied may be configured (or switched) by RRC / MAC CE.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥1) of TCI states (UL TCI states) applied to a UL channel/RS and the number M (≥1) of TCI states (DL TCI states) applied to a DL channel/RS may be defined. At least one of N and M may be notified/configured/indicated for the UE via higher layer signaling / physical layer signaling.

In the present disclosure, description "N = M = X (X is any integer)" may mean that X TCI states (joint TCI states) (corresponding to X TRPs) common to UL and DL are notified/configured/indicated for the UE. Description "N = X (X is any integer), M = Y (Y is any integer, Y may equal X)" may mean that X UL TCI states (corresponding to X TRPs) and Y DL TCI states (corresponding to Y TRPs) (in other words, separate TCI states) are each notified/configured/indicated for the UE.

For example, description "N = M = 1" may mean that one TCI state common to UL and DL is notified/configured/indicated for the UE, the TCI state being for a single TRP (joint TCI state for a single TRP).

For example, description "N = 1, M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to UL and DL are notified/configured/indicated for the UE, the plurality of TCI states being for a plurality of (two) TRPs (joint TCI states for multiple TRPs).

For example, description "N = 2, M = 2" may mean that a plurality of (two) UL TCI states and a plurality of (two) DL TCI states for a plurality of (two) TRPs are notified/configured/indicated for the UE (separate TCI states for multiple TRPs).

Note that, in the above examples, the cases where N and M values are 1 or 2 have been described, but the N and M values may be 3 or more, and N and M may be different from each other.

In Rel. 17, support of N = M = 1 is assumed. For example, indication of one common beam may be supported by RRC / MAC CE / DCI, and the one common beam may be applied to a plurality of DL/UL channels / reference signals.

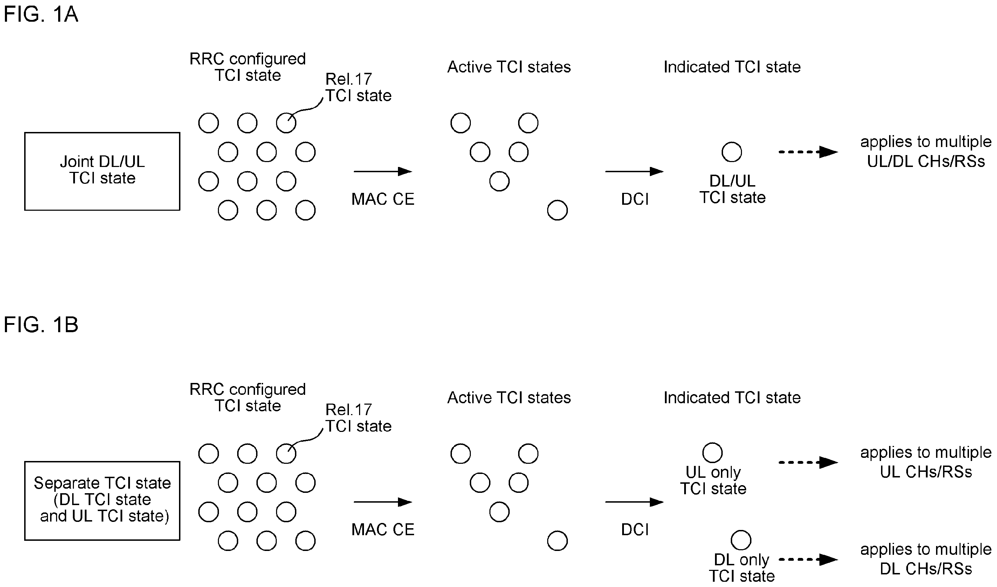

FIGS. 1A and 1B show examples of a unified TCI framework. FIGS. 1A and 1B show an example of a joint DL/UL TCI state and an example of a separate TCI state (DL TCI state and UL TCI state), respectively.

In the example in FIG. 1A, an RRC parameter (information element) configures a plurality of TCI states for both DL and UL. In the present disclosure, the TCI states configured by the RRC parameter may be referred to as configured TCI states. The MAC CE may activate a plurality of TCI states among the plurality of configured TCI states. DCI may indicate one of the plurality of activated TCI states. In the present disclosure, the TCI state indicated by the DCI parameter may be referred to as an indicated TCI state.

The DCI may be UL DCI (for example, DCI used to schedule a PUSCH) or DL DCI (for example, DCI used to schedule a PDSCH). The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 (or later versions) NR, it is assumed that beam activation/indication for TCI states associated with different physical cell identifiers (PCIs) is supported by a MAC CE / DCI. In Rel-18 (or later versions) NR, it is assumed that indication of serving cell change for cells with different PCIs is supported by a MAC CE / DCI.

A TCI state (for example, joint DL/UL TCI state) configuration/indication method of FIG. 1A and a TCI state (for example, separate TCI state) application configuration/indication method of FIG. 1B may be switched to each other to be applied. Which of the joint DL/UL TCI state or the separate TCI state is to be applied may be configured for the UE by a base station by using a higher layer parameter.

### (TCI State Indication)

A Rel-17 unified TCI framework supports Modes 1 to 3 below.
{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID, for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate), for the DCI, the following.
- A CS-RNTI is used to scramble a CRC for the DCI.
- Values of the following DCI fields (special fields) are set as follows:
   - redundancy version (RV) fields are all '1's;
   - modulation and coding scheme (MCS) fields are all '1's;
   - a new data indicator (NDI) field is 0; and
   - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in Mode 2 / Mode 3 described above may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that if the UE is configured with a Rel-17 TCI state, a TCI field is always present in DCI format 1_1/1_2 and that if the UE does not support TCI update via DCI, the UE ignores a TCI field.

In Rel. 15/16, whether a TCI field is present (information on the presence of TCI in DCI, "tci-PresentInDCI") is configured for each CORESET.

The TCI field in DCI format 1_1 is 0 bit in a case where a higher layer parameter "tci-PresentInDCI" is not enabled, and is 3 bits in a case other than the case. If the BWP indicator field indicates a BWP other than an active BWP, the UE follows the following operation.
{Operation} If a higher layer parameter "tci-PresentInDCI" is not enabled for a CORESET used for a PDCCH for communicating that DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bit in a case where a higher layer parameter "tci-PresentInDCI-1-2" is not configured, and is 1, 2, or 3 bits determined by the higher layer parameter "tci-PresentInDCI-1-2" in a case other than the case. If the BWP indicator field indicates a BWP other than an active BWP, the UE follows the following operation.
{Operation} If a higher layer parameter "tci-PresentInDCI-1-2" is not configured for a CORESET used for a PDCCH for communicating that DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating that DCI format 1_2, for all the CORESETs in the indicated BWP.

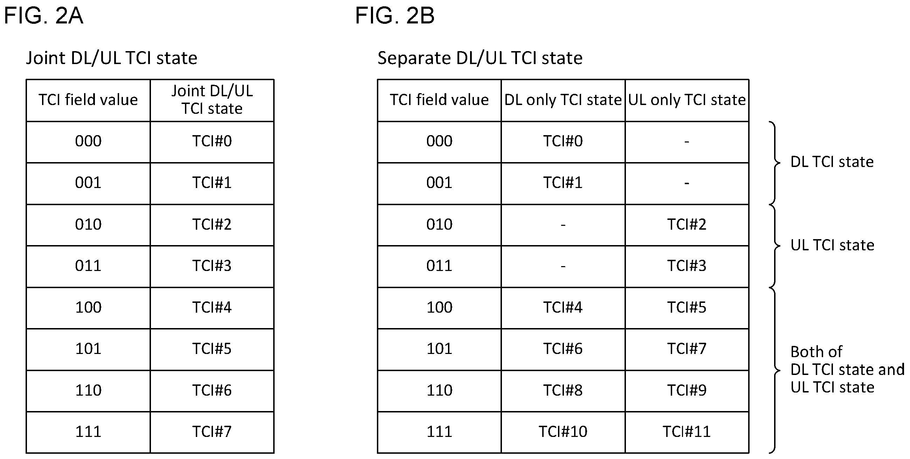

FIG. 2A shows an example of DCI based joint DL/UL TCI state indication. A TCI state ID indicating a joint DL/UL TCI state is associated with a TCI field value for the joint DL/UL TCI state indication.

FIG. 2B shows an example of DCI based separate DL/UL TCI state indication. At least one of a TCI state ID indicating a DL-only TCI state and a TCI state ID indicating a UL-only TCI state is associated with a TCI field value for the separate DL/UL TCI state indication. In this example, TCI field values "000" to "001," "010" to "011," and "100" to "111" are associated with only one TCI state ID for DL, only one TCI state ID for UL, and both one TCI state ID for DL and one TCI state ID for UL, respectively.

### (Indicated TCI State / Configured TCI State)

For a Rel-17 TCI state, a unified/common TCI state may mean a Rel-17 TCI state indicated by using DCI / MAC CE / RRC (of Rel. 17) (indicated Rel-17 TCI state).

In the present disclosure, an indicated Rel-17 TCI state, an indicated TCI state, an indicated joint TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI / MAC CE / RRC of Rel. 17), a dynamic grant (DCI) / configured grant PUSCH, and a plurality of (for example, all the) dedicated PUCCH resources. A TCI state indicated by DCI / MAC CE / RRC may be referred to as an indicated TCI state or a unified TCI state.

For the Rel-17 TCI state, a TCI state other than the unified TCI state may mean a Rel-17 TCI state configured by using a MAC CE / RRC (of Rel. 17) (configured Rel-17 TCI state). In the present disclosure, a configured Rel-17 TCI state, a configured TCI state, a configured joint TCI state, a TCI state other than a unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI / MAC CE / RRC of Rel. 17), a dynamic grant (DCI) / configured grant PUSCH, and a plurality of (for example, all the) dedicated PUCCH resources. The configured Rel-17 TCI state may be configured by RRC / MAC CE for each CORESET / each resource / each resource set, and may not be updated even when the above-described indicated Rel-17 TCI state (common TCI state) is updated.

It is studied that an indicated Rel-17 TCI state is applied to a UE-specific channel/signal (RS). It is studied to notify the UE of which of an indicated Rel-17 TCI state or a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter related to a TCI state in Rel. 15/16. It is studied that the configured Rel-17 TCI state is configured/indicated for each CORESET / each resource / each resource set by using RRC / MAC CE. It is studied that the UE judges the configuration/indication, based on a specific parameter.

It is studied that for the UE, update of an indicated TCI state and update of a configured TCI state are separately performed. For example, when a unified TCI state for the indicated TCI state is updated for the UE, the configured TCI state may not be updated. It is studied that the UE judges the update, based on a specific parameter.

It is studied that for a PDCCH/PDSCH, switching between application of an indicated Rel-17 TCI state and non-application of the indicated Rel-17 TCI state (application of a configured Rel-17 TCI state, application of a TCI state configured separately from the indicated Rel-17 TCI state) is performed by using higher layer signaling (RRC / MAC CE).

For intra-cell beam indication (TCI state indication), it is studied that an indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that an indicated Rel-17 TCI state is supported for a UE-specific CORESET and a PDSCH associated with the CORESET.

In Rel. 15, whether a TCI state is indicated for CORESET #0 depends on base station implementation. In Rel. 15, for CORESET #0 for which a TCI state is indicated, the indicated TCI state is applied. For CORESET #0 for which a TCI state is not indicated, an SSB and QCL selected in the latest (most recent) PRACH transmission are applied.

For a unified TCI state framework of Rel. 17 (or later versions), a TCI state related to CORESET #0 is under study.

For example, in the unified TCI state framework of Rel. 17 (or later versions), for Rel-17 TCI state indication for CORESET #0, whether to apply an indicated Rel-17 TCI state associated with a serving cell may be configured for each CORESET by RRC, and when the indicated Rel-17 TCI state is not applied, an existing MAC CE / RACH signaling mechanism (legacy MAC CE / RACH signalling mechanism) may be used.

Note that a CSI-RS associated with a Rel-17 TCI state applied to CORESET #0 may be QCLed with an SSB associated with a serving cell PCI (physical cell ID) (in a manner similar to that of Rel. 15) .

For CORESET #0, a CORESET with a common search space (CSS), and a CORESET with a CSS and a UE-specific search space (USS), whether each CORESET follows an indicated Rel-17 TCI state may be configured by an RRC parameter. When the CORESET is not configured to follow the indicated Rel-17 TCI state, a configured Rel-17 TCI state may be applied to the CORESET.

For a non-UE-dedicated channel/RS (excluding the CORESET), whether each channel / resource / resource set follows an indicated Rel-17 TCI state may be configured by an RRC parameter. When the channel / resource / resource set is not configured to follow the indicated Rel-17 TCI state, a configured Rel-17 TCI state may be applied to the channel / resource / resource set.

### (Channel/RS to Which Indicated TCI State Is Applied)

An indicated TCI state with a MAC CE / DCI may be applied to the following channels/RSs.

### {PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows a TCI state activated by the MAC CE, or is QCLed with an SSB.
- The indicated TCI state is always applied to a CORESET with USS/CSS type 3 and with an index other than index 0.
- When a unified TCI state is configured to be followed for a CORESET with at least a CSS of a type other than CSS type 3 and with an index other than index 0, the indicated TCI state is applied to the CORESET. Otherwise, a configured TCI state for the CORESET is applied to the CORESET.

### {PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, a configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

### {CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. A configured TCI state for the CSI-RS is applied to another CSI-RS.

### {PUCCH}

- The indicated TCI state is always applied to all the dedicated PUCCH resources.

### {PUSCH}

The indicated TCI state is always applied to a dynamic/configured grant PUSCH.

### {SRS}

- When a unified TCI state is configured to be followed for an SRS resource set for an A-SRS for beam management usage and an A/SP/P-SRS for codebook (CB) / non-codebook (NCB) / antenna switching usage, the indicated TCI state is applied to the SRS resource set. A configured TCI state in the SRS resource set is applied to another SRS.

### (Beam Application Time (BAT))

For DCI-based beam indication in Rel. 17, studies 1 and 2 below are under study in relation to application time for indication of a beam / unified TCI state.

### {Study 1}

It is studied that a first slot to which indicated TCI is applied is at least Y symbols after a last symbol of an acknowledgement (ACK) for joint or separate DL/UL beam indication. It is studied that a first slot to which indicated TCI is applied is at least Y symbols after a last symbol of an ACK / negative acknowledgement (NACK) for joint or separate DL/UL beam indication. The Y symbols may be configured by a base station, based on a UE capability reported by the UE. The UE capability may be reported in a symbol unit.

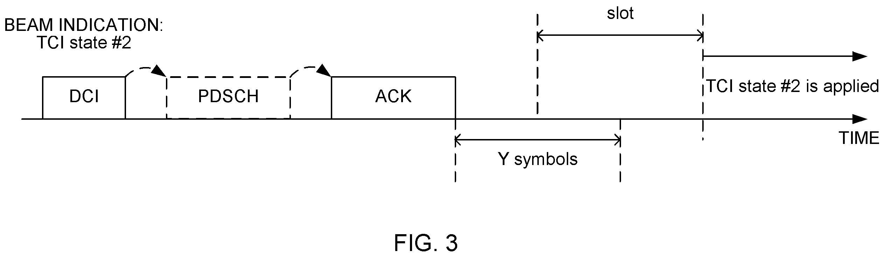

In an example in FIG. 3, the ACK may be an ACK for a PDSCH scheduled by beam indication DCI. In this example, the PDSCH may not be transmitted. The ACK in this case may be an ACK for the beam indication DCI.

For DCI-based beam indication in Rel. 17, it is studied that at least one Y symbol is configured for the UE for each BWP/CC.

When SCS differs between a plurality of CCs, a Y symbol value also differs, and thus there is a possibility that the application time differs between the plurality of CCs.

### {Study 2}

For a case of CA, an application timing / BAT of the beam indication may follow one of choices 1 to 3 below.
{Choice 1} Both of the first slot and Y symbols are determined on a carrier with the lowest SCS, from among one or more carriers to which the beam indication is applied.
{Choice 2} Both of the first slot and Y symbols are determined on a carrier with the lowest SCS, from among one or more carriers to which the beam indication is applied and a UL carrier that delivers the ACK.
{Choice 3} Both of the first slot and Y symbols are determined on a UL carrier that delivers the ACK.

It is studied that as a CC simultaneous beam update function of Rel. 17, a beam is common to a plurality of CCs in the CA. According to study 2, the application time is common to the plurality of CCs.

The application time (Y symbols) for the beam indication for the CA may be determined on a carrier with the lowest SCS, from among carriers to which the beam indication is applied. MAC CE-based beam indication in Rel. 17 (when only a single TCI codepoint is activated) may follow a Rel-16 application timeline for MAC CE activation.

Based on these studies, it is studied that the following operation is defined in a specification.

### {Operation}

When the UE transmits a last symbol of a PUCCH with HARQ-ACK information corresponding to DCI for communicating TCI state indication, application of an indicated TCI state with a Rel-17 TCI state may be started at a first slot corresponding to at least Y symbols after the last symbol of the PUCCH. Y may be a higher layer parameter (for example, BeamAppTime_r17 [symbol]). Both of the first slot and Y symbols may be determined on a carrier with the lowest SCS, from among carriers to which the beam indication is applied. At a certain timing, the UE may assume one indicated TCI state with a Rel-17 TCI state for DL and UL, or may assume one indicated TCI state with a Rel-17 TCI state for UL (separately from DL).

In place of Y [symbol], X [ms] may be used.

For the application time, it is studied that the UE reports at least one of UE capabilities 1 and 2 below.

### {UE Capability 1}

Minimum application time for each SCS (minimum value of Y symbols between a last symbol of a PUCCH that delivers an ACK and a first slot to which a beam is applied).

### {UE Capability 2}

A minimum time gap between a last symbol of a beam indication PDCCH (DCI) and a first slot to which a beam is applied. A gap between the last symbol of the beam indication PDCCH (DCI) and the first slot to which the beam is applied may satisfy the UE capability (minimum time gap).

UE capability 2 may be an existing UE capability (for example, timeDurationForQCL).

A relationship between indication of a beam and a channel/RS to which the beam is applied may satisfy at least one of UE capabilities 1 and 2.

For the application time, it is conceivable that a parameter (for example, BeamAppTime_r17) configured by the base station serves as an optional field.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID) or may correspond to different cell IDs. The cell ID may be a physical cell ID (for example, a PCI) or a virtual cell ID.

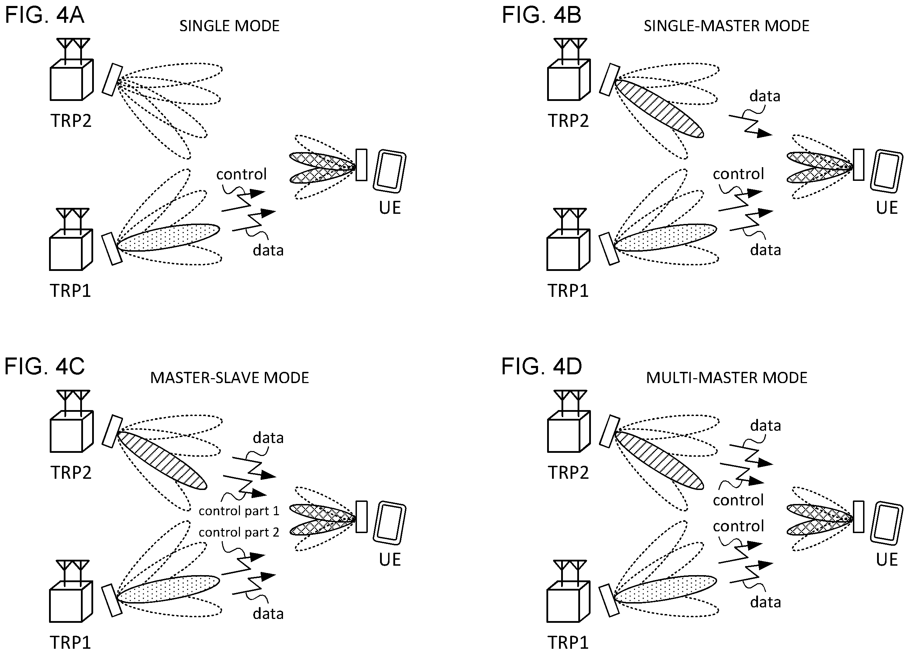

FIGS. 4A to 4D are diagrams to show examples of a multi-TRP scenario. In these examples, it is assumed that each TRP can transmit four different beams, but this is not restrictive.

FIG. 4A shows an example of a case where only one TRP (in the present example, TRP 1) of the multi-TRP performs transmission to the UE (which may be referred to as a single mode, a single TRP, or the like). In this case, TRP 1 transmits, to the UE, both a control signal (PDCCH) and a data signal (PDSCH).

In the present disclosure, a single TRP mode may mean a mode in a case where multi-TRP (mode) are not configured.

FIG. 4B shows an example of a case where only one TRP (in the present example, TRP 1) of the multi-TRP transmits a control signal to the UE and where the multi-TRP transmit data signals (which may be referred to as a single master mode). The UE receives respective PDSCHs transmitted from the multi-TRP, based on one piece of downlink control information (DCI).

FIG. 4C shows an example of a case where each of the multi-TRP transmits part of a control signal to the UE and where the multi-TRP transmit data signals (which may be referred to as a master slave mode). TRP 1 and TRP 2 may transmit part 1 of the control signal (DCI) and part 2 of the control signal (DCI), respectively. Part 2 of the control signal may depend on part 1. The UE receives, based on these parts of the DCI, respective PDSCHs transmitted from the multi-TRP.

FIG. 4D shows an example of a case where each of the multi-TRP transmits a separate control signal to the UE and where the multi-TRP transmit data signals (which may be referred to as a multi-master mode). TRP 1 and TRP 2 may transmit a first control signal (DCI) and a second control signal (DCI), respectively. The UE receives, based on these pieces of DCI, respective PDSCHs transmitted from the multi-TRP.

When such plurality of PDSCHs (which may be referred to as multi-PDSCH (multiple PDSCHs)) from multi-TRP as those shown in FIG. 4B are scheduled by using one piece of DCI, the DCI may be referred to as single DCI (S-DCI, single PDCCH). When such plurality of PDSCHs from multi-TRP as those shown in FIG. 4D are scheduled by using a plurality of respective pieces of DCI, the plurality of pieces of DCI may be referred to as multi-DCI (M-DCI, multi-PDCCH (multiple PDCCHs)).

From each TRP of the multi-TRP, a different transport block (TB) / codeword (CW) / different layer may be transmitted. Alternatively, from each TRP of the multi-TRP, the same TB/CW/layer may be transmitted.

As one mode of multi-TRP transmission, non-coherent joint transmission (NCJT) is under study. In NCJT, for example, TRP 1 performs modulation mapping on a first codeword, performs layer mapping, and transmits a first PDSCH in layers of a first number (for example, two layers) by using first precoding. TRP 2 performs modulation mapping on a second codeword, performs layer mapping, and transmits a second PDSCH in layers of a second number (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a channel with high quality is possible.

There is a possibility that NCJT using multi-TRP/multi-panel uses a high rank. For supporting ideal and non-ideal backhaul between a plurality of TRPs, both single DCI (single PDCCH, for example, FIG. 4B) and multi-DCI (multi-PDCCH, for example, FIG. 4D) may be supported. For both of the single DCI and the multi-DCI, a maximum number of TRPs may be 2.

For single PDCCH design (mainly for ideal backhaul), TCI enhancement is under study. Each TCI codepoint in DCI may correspond to one or two TCI states. A TCI field size may be the same as that of Rel. 15.

With respect to a PDCCH/CORESET defined in Rel. 15, one TCI state without a CORESET pool index (CORESETPoolIndex) (which may be referred to as TRP information (TRP Info)) is configured for one CORESET.

With respect to enhancement of a PDCCH/CORESET defined in Rel. 16, a CORESET pool index is configured for each CORESET in multi-DCI-based multi-TRP.

### (Beam Indication for Multi-TRP)

It is assumed that as beam indication for multi-TRP, the following two mechanisms (for example, beam indication method 1 / beam indication method 2) are supported.

### {Beam Indication Method 1}

The UE may receive one beam indication (for example, DCI). The UE may determine/judge a plurality of TCI states (corresponding to one or more respective TRPs), based on a TCI field included in the one beam indication.

Beam indication method 1 is suitably applicable under an ideal backhaul environment. Beam indication method 1 may be suitably applied, for example, in a single DCI-based transmission.

For beam indication method 1, a minimum BAT may be defined under a non-ideal backhaul environment (for example, multi-DCI-based transmission). For beam indication method 1, an additional BAT corresponding to at least one of the plurality of TRPs may be defined under a non-ideal backhaul environment (for example, multi-DCI-based transmission).

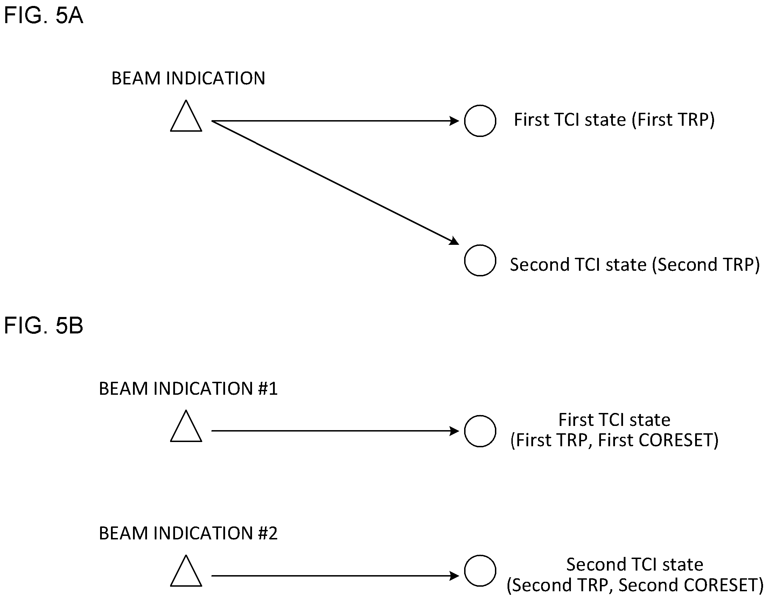

FIG. 5A is a diagram to show an example of beam indication method 1. In FIG. 5A, the UE receives one beam indication. The one beam indication may indicate two TCI states (a first TCI state and a second TCI state). The UE judges the first TCI state and the second TCI state, based on one or more TCI fields included in the one beam indication. The first TCI state may correspond to a first TRP. The second TCI state may correspond to a second TRP.

### {Beam Indication Method 2}

The UE may receive a plurality of (for example, two) beam indications (for example, DCI). The UE may determine/judge one or more TCI states corresponding to each beam indication, based on each of TCI fields included in the plurality of beam indications. For example, the UE may judge a first (DL/UL) TCI state and a second (DL/UL) TCI state, based on a first beam indication and a second beam indication, respectively.

The first beam indication / first TCI state may correspond to a first TRP / first CORESET pool index (for example, a CORESET pool index of a first value (for example, 0)) / first CORESET (1st CORESETs). The second beam indication / second TCI state may correspond to a second TRP / second CORESET pool index (for example, a CORESET pool index of a second value (for example, 1)) / second CORESET (2nd CORESETs).

Beam indication method 2 is suitably applicable under a non-ideal backhaul environment. Beam indication method 2 may be suitably applied, for example, in multi-DCI-based transmission.

FIG. 5B is a diagram to show an example of beam indication method 2. In FIG. 5B, the UE receives two beam indications. The UE judges a first TCI state, based on a TCI field included in a certain beam indication of the two beam indications. The UE judges a second TCI state, based on a TCI field included in another beam indication of the two beam indications.

In multi-DCI-based multi-TRP, when one TCI state is indicated by a MAC CE / DCI, a TCI state (for example, an indicated TCI state) is indicated for each TRP (or each CORESET pool index).

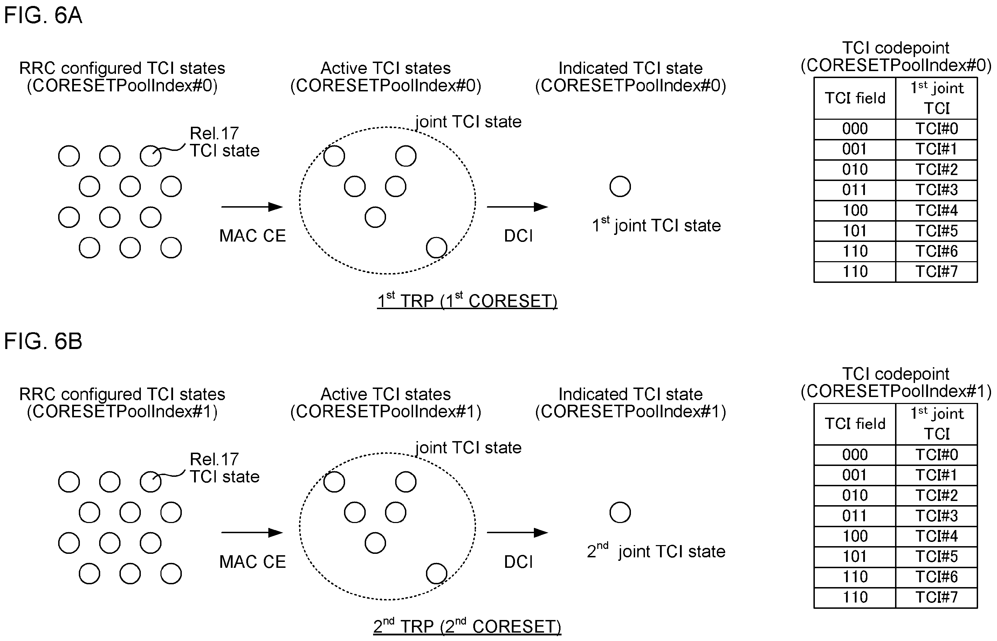

For example, a unified TCI state corresponding to a first TRP (or first CORESET pool index #0) is indicated by an RRC parameter / MAC CE / DCI for first CORESET pool index #0 (see FIG. 6A). A unified TCI state corresponding to a second TRP (or second CORESET pool index #1) is indicated by an RRC parameter / MAC CE / DCI for second CORESET pool index #1 (see FIG. 6B).

As described above, in an existing system (for example, Rel. 17 (or earlier versions)), a TCI field included in DCI associated with one CORESET pool index can indicate a joint/DL/UL TCI state specific to the same CORESET pool index value. In the unified TCI framework, the joint/DL/UL TCI state may mean at least one of a joint TCI state (TCI state applied to UL and DL), a separate DL TCI state (TCI state applied only to DL), and a separate UL TCI state (TCI state applied only to UL).

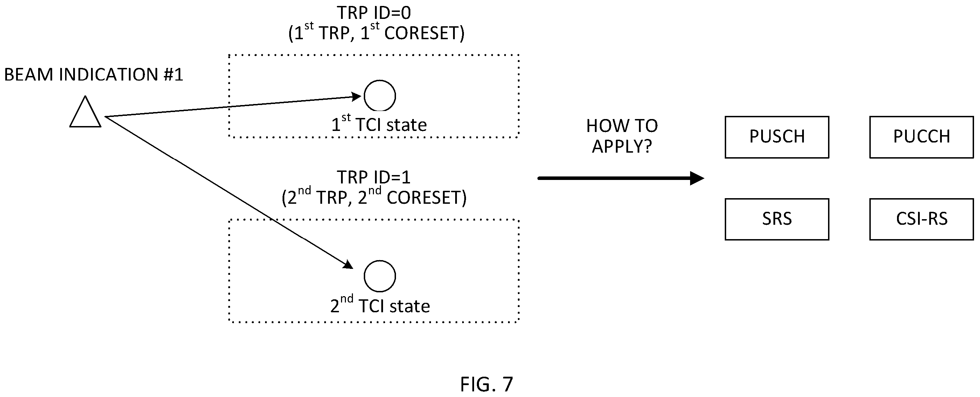

In a case where single-DCI based multi-TRP are supported/applied, when one indication (for example, single DCI) indicates one or more (for example, two) indicated joint/DL/UL TCI states, how to apply the indicated joint/DL/UL TCI states to respective channels / reference signals (RSs) is an issue (see FIG. 7).

FIG. 7 shows a case where beam indication (beam instruction) #1 (for example, a TCI state field of the DCI) indicates a first indicated TCI state and a second indicated TCI state. In this case, the first TCI state and the second TCI state may be applied to a first PDSCH (for example, corresponding to a first TRP) and a second PDSCH (for example, corresponding to a second TRP), respectively.

On the other hand, a study has not been sufficiently made on which TCI state (for example, indicated joint TCI state) is to be applied to / associated with another channel/RS (for example, PUSCH/PUCCH/SRS/CSI-RS) (see FIG. 7).

Accordingly, a study has not been sufficiently made on a case where the UE fails to judge a TCI state to be applied. Unless this study is sufficient, appropriate application of a TCI state may fail, and degradation in communication quality, throughput reduction, and the like may occur.

Thus, the inventors of the present invention came up with the idea of a method for appropriately performing operation related to a unified TCI state.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a reception panel, a UE panel, a UE capability value, a UE capability value set, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, an indicated TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, channel/signal transmission/reception using a single TRP may be interpreted as the channel/signal transmission/reception (for example, NCJT/CJT/repetition) with the same TCI state (joint/separate/indicated TCI state) or the channel/signal transmission/reception (for example, NCJT/CJT/repetition) with one TCI state (joint/separate/indicated TCI state).

Channel/signal transmission/reception using a single TRP may be interpreted as the channel/signal transmission/reception (for example, NCJT/CJT/repetition) with different TCI states (joint/separate/indicated TCI states) or the channel/signal transmission/reception (for example, NCJT/CJT/repetition) with a plurality of (for example, two) different TCI states (joint/separate/indicated TCI states).

In the present disclosure, a single TRP, a single-TRP system, single-TRP transmission, and a single PDSCH may be interchangeably interpreted. In the present disclosure, multi-TRP (multiple TRPs), a multi-TRP system, multi-TRP transmission, and multi-PDSCH may be interchangeably interpreted.

In the present disclosure, single DCI, a single PDCCH, multi-TRP based on single DCI, two TCI states in at least one TCI codepoint being activated, at least one codepoint of a TCI field being mapped to two TCI states, and a specific index (for example, a TRP index, a CORESET pool index, or an index corresponding to a TRP) being configured for a specific channel/CORESET may be interchangeably interpreted.

In the present disclosure, a single TRP, a channel using a single TRP, a channel using one TCI state / spatial relation, multi-TRP being not enabled by RRC/DCI, a plurality of TCI states / spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted.

In the present disclosure, multi-TRP based on multi-DCI, one CORESET pool index (CORESETPoolIndex) value being configured for a CORESET, and a plurality of specific indices (for example, TRP indices, CORESET pool indices, or indices corresponding to TRPs) being configured for a specific channel/CORESET may be interchangeably interpreted.

In the present disclosure, TRP #1 (first TRP) may correspond to CORESET pool index= 0, or may correspond to a first TCI state of two TCI states corresponding to one codepoint of a TCI field. TRP #2 (second TRP) TRP #1 (first TRP) may correspond to CORESET pool index = 1, or may correspond to a second TCI state of the two TCI states corresponding to one codepoint of the TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

In the present disclosure, beam indication DCI, a beam indication MAC CE, and beam indication DCI / MAC CE may be interchangeably interpreted. In other words, indication related to an indicated TCI state for a UE may be performed by using at least one of DCI and a MAC CE.

In the present disclosure, a channel, a signal, and a channel/signal may be interchangeably interpreted. In the present disclosure, a DL channel, a DL signal, a DL signal/channel, DL signal/channel transmission/reception, DL reception, and DL transmission may be interchangeably interpreted. In the present disclosure, a UL channel, a UL signal, a UL signal/channel, UL signal/channel transmission/reception, UL reception, and UL transmission may be interchangeably interpreted.

In the present disclosure, applying a TCI state / QCL assumption to each channel/signal/resource may mean applying a TCI state / QCL assumption to transmission and reception of each channel/signal/resource.

In the present disclosure, a first TCI state (TCI state indicated first) may correspond to a first TRP. In the present disclosure, a second TCI state (TCI state indicated second) may correspond to a second TRP. In the present disclosure, an n th TCI state (TCI state indicated n th) may correspond to an n th TRP.

In the present disclosure, a value of a first CORESET pool index (for example, 0), a value of a first TRP index (for example, 1), and a first TCI state (first DL/UL (joint/separate) TCI state) may correspond to each other. In the present disclosure, a value of a second CORESET pool index (for example, 1), a value of a second TRP index (for example, 2), and a second TCI state (second DL/UL (joint/separate) TCI state) may correspond to each other.

Note that each embodiment of the present disclosure below will primarily describe a method in which application of a plurality of TCI states in transmission/reception using a plurality of TRPs is performed for two TRPs (that is, a case where at least one of N and M is 2), but the number of TRPs may be three or more (two or more), and each embodiment may be applied so as to support the number of TRPs. In other words, at least one of N and M may be a number greater than 2.

### (Radio Communication Method)

The present embodiment may be applied to single-DCI based multi-TRP. The single-DCI based multi-TRP may indicate operation in which one piece of DCI (for example, single DCI) schedules/triggers/activates a plurality of channels/signals.

For example, the single-DCI based multi-TRP may include at least one of PUSCH repetition scheduled by single DCI (for example, S-DCI M-TRP PUSCH repetition), PUCCH repetition scheduled/triggered by single DCI (for example, S-DCI M-TRP PUCCH repetition), and simultaneous UL transmission using a plurality of panels based on single DCI (for example, S-DCI M-TRP STxMP). Alternatively, the single-DCI based multi-TRP may include a PDSCH/PUSCH/PUCCH/SRS/CSI-RS scheduled/triggered/activated by single DCI.

In the single-DCI based multi-TRP, a TRP ID may be defined/notified. The TRP ID (for example, TRP ID = {0, 1}) may be interpreted as or associated with, for example, a TCI state (for example, {1st TCI, 2nd TCI}) and a control resource set pool index (for example, CORESETPoolIndex = {0, 1}). For example, a base station may explicitly configure/indicate, for a UE, information related to a TRP identifier by using RRC / MAC CE / DCI.

Alternatively, the TRP ID may be associated with an implicit ID. For example, for a PUSCH, an SRS resource set (for example, a 1st/2nd SRS resource set) may be associated with a TRP.

For each TRP, one or a plurality of (for example, two) indicated TCI states may be notified depending on a channel/signal. Only one indicated TCI state may be notified for a specific channel/signal.

Note that the present embodiment is not limited to single-DCI based multi-TRP, and may be applied to multi-DCI based multi-TRP.

### <Zero-th Embodiment>

In a zero-th embodiment, an example of notification of a unified TCI state for single-DCI based multi-TRP will be described.

In the single-DCI based multi-TRP, an explicit TRP ID may be configured/indicated for each channel/RS. Alternatively, an implicit TRP ID may be configured/indicated for each channel/RS. Each channel/RS may be interpreted as at least one of a PUSCH, a PUCCH, an SRS, a CSI-RS, a PDSCH, and a PDCCH.

For example, a TRP ID and a CORESET pool index may be used for single-DCI based multi-TRP and multi-DCI based multi-TRP, respectively. Alternatively, a CORESET pool index may be associated with a TRP ID. In this case, CORESET pool indices may be applied to both of the single-DCI based multi-TRP and the multi-DCI based multi-TRP.

When RRC / MAC CE / DCI indicates one indicated TCI state (for example, indicated TCI), a UE may apply the indicated TCI state to all the channels/RSs. One indicated TCI state may mean one indicated joint/UL TCI state or one indicated joint/DL TCI state.

When the RRC / MAC CE / DCI indicates a plurality of (for example, two) indicated TCI states, the UE may apply one or both of the two indicated TCI states, depending on a TRP ID corresponding to each channel/RS.

### <First Embodiment>

In a first embodiment, an example of allocation of one or more unified TCI states (for example, indicated TCI states) to UL transmission (for example, PUSCH transmission) scheduled by single DCI will be described. Note that the following description describes a PUSCH as an example, but may be applied to another channel / reference signal. Allocation may be interpreted as mapping/association/linking.

A plurality of (for example, two) indicated TCI states may be allocated to a PUSCH (for example, PUSCH repetition or two or more PUSCHs) scheduled/triggered/activated by single DCI, based on at least one of options 1-1 to 1-2 below.

### {Option 1-1}

The plurality of (for example, two) indicated TCI states may be allocated to the PUSCH scheduled/triggered/activated by the single DCI, by using RRC / MAC CE.

### {Option 1-2}

One of (or either of) the plurality of indicated TCI states may be allocated to the PUSCH scheduled/triggered/activated by the single DCI, by using DCI. The DCI used to indicate the indicated TCI states and the DCI that schedules/triggers/activates the PUSCH may be different pieces of DCI or the same DCI.

DCI may indicate two indicated TCI states, based on at least one (or both) of options 1-2-1 and 1-2-2 below.

### <<Option 1-2-1>>

Configuration of two SRS resource sets (for example, SRS resource set for CB/NCB usage (SRS resourcee set with usage = CB/NCB)) may be supported for single-DCI based multi-TRP. Each PUSCH may be transmitted by using at least one of a joint/UL TCI state and a TPC parameter corresponding to an SRS resource set (or SRS resource) indicated by a certain rule / higher layer / DCI.

The association between the SRS resource set (or SRS resource) and the joint/UL TCI state or TPC parameter parameter may be defined in a specification or may be configured for the UE by a base station using an RRC parameter or the like.

### <<Option 1-2-2>>

When an SRS resource indication field (for example, SRS resource set indicator field) is present in the DCI, the SRS resource set indication field may indicate an SRS resource set (or SRS resource). For example, the SRS resource set indicated by the SRS resource set indication field may be at least one of first, second, both (first, second), and both (second, first) (for example, SRS resource set indicator field = {1st, 2nd, both (1st, 2nd), both (2nd, 1st)}). The SRS resource set (or SRS resource) may be associated with a certain TCI state (or TRP ID).

When two SRS resource sets (for example, SRS resource sets for CB/NCB usage) are configured, an SRS resource set indication field may be present in DCI format 0_1/0_2. The DCI including the SRS resource set indication field may schedule/trigger/activate a PUSCH.

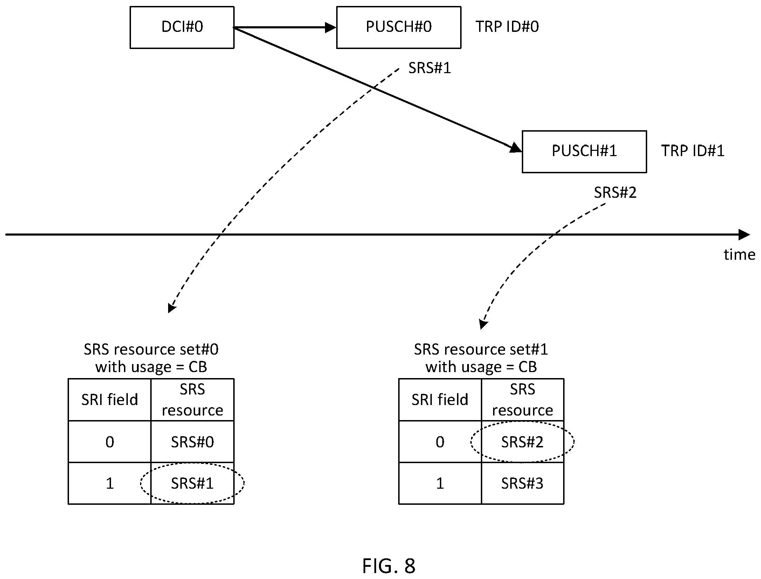

FIG. 8 shows an example of a case where the two SRS resource sets (here, SRS resource sets #0/#1) are indicated. FIG. 8 shows a case where one piece of DCI schedules two PUSCHs (here, PUSCH #0 and PUSCH #1) and where the DCI indicates two SRS resource sets / SRS resources. FIG. 8 shows a case where PUSCH #0 and PUSCH #1 correspond to SRS #1 of SRS resource set #0 and SRS #2 of SRS resource set #1, respectively.

The UE may determine, based on an indicated joint/UL TCI state applied to an SRS resource indicated by the DCI (for example, DCI format 0_1/0_2), a certain parameter for a PUSCH scheduled/activated by the DCI. The certain parameter may be a UL transmission filter, a pass loss reference signal (for example, PL-RS), or a UL power control parameter (for example, UL PC parameter setting) for PUSCH. The UL power control parameter may be a parameter applied to power control for PUSCH (at least one of P0, α, and a closed loop index).

A certain field (one or a plurality of fields) of the DCI may indicate at least one of SRS resource sets and SRS resources included in respective SRS resource sets. Here, the certain field included in the DCI may indicate an SRS resource corresponding to PUSCH #0 and an SRS resource corresponding to PUSCH #1.

When the SRS resource set indication field (or SRS resource indication field) is not included/present in the DCI (for example, when DCI format 0_0 schedules a PUSCH), SRS resource sets (or SRS resources) may be selected by a certain rule or may be indicated by a higher layer parameter. The certain rule may be, for example, an SRS resource set index (for example, a first SRS resource set with a smaller index is selected, or the like).

### {SRS Resource (Set) and Indicated TCI State}

In a single-DCI based PUSCH, it is important when SRS resources indicated by DCI (for example, an SRI included in the DCI) correspond to a joint/UL TCI state and a TPC parameter (for example, a closed-loop power control state (for example, CL-PC state) / accumulated value of TCP commands, or the like), how two indicated TCI states are applied (or allocated) to the respective RSR resources (sets).

For example, for the PUSCH, a joint/UL TCI state and a TPC-related parameter for an SRS resource set (or SRS resource) corresponding to the SRI may be applied. As an example of this, at least one of Alt. 1-1 to Alt. 1-2 below may be applied.

### <<Alt. 1-1>>

When one indicated joint/UL TCI state is indicated, the indicated one indicated joint/UL TCI state may be allocated/applied to all the SRS resources (sets).

The SRS resources (sets) to which Alt 1-1 is to be applied may be limited to an SRS resource (set) with specific usage. The specific usage may be codebook/non-codebook (for example, CB/NCB). In this case, a configured joint/UL TCI state may be applied to an SRS resource (set) with other usage.

### <<Alt. 1-2>>

When two indicated joint/UL TCI states are indicated, one of the indicated two respective indicated joint/UL TCI states may be allocated/applied to each SRS resource (set).

For example, the UE may apply a first indicated joint/UL TCI state and a second indicated joint/UL TCI state to a first SRS resource set (or first SRS resource included in the SRS resource set) and a second SRS resource set (or second SRS resource included in the SRS resource set), respectively. Allocation / allocation rule between an SRS resource (set) and a unified TCI state (or TRP ID) may be defined in a specification, or may be configured by an RRC parameter.

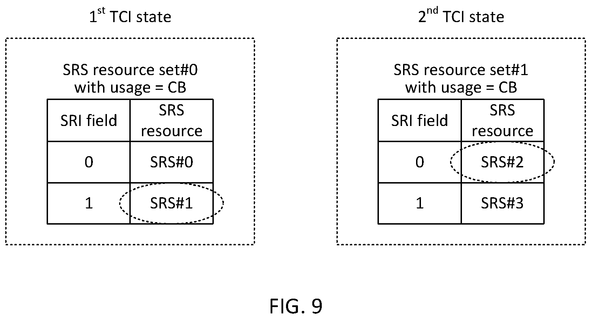

FIG. 9 shows a case where first indicated joint/UL TCI state #1 and second indicated joint/UL TCI state #2 are allocated to first SRS resource set #0 (or SRS #0 / SRS #1) and second SRS resource set #1 (or SRS #2 / SRS #3), respectively.

This enables a separate indicated joint/UL TCI state to be indicated for each SRS resource set. Which of either or both of the SRS resource sets correspond to the PUSCH is indicated for the UE, and thus which of either or both of the indicated TCI states are to be applied can be indicated for the UE.

It is assumed that the PUSCH and an SRS corresponding to the SRI for the PUSCH use the same spatial relation / precoder, and thus applying the first embodiment can also maintain, in Rel. 18 (or later versions), a mechanism in which a PUSCH and an SRS use the same spatial relation / precoder. With this, improvement in reception performance of the base station / appropriate PUSCH precoder indication is possible.

The SRS resources (sets) to which Alt 1-2 is to be applied may be limited to an SRS resource (set) with specific usage. The specific usage may be codebook/non-codebook (for example, CB/NCB). In this case, a configured joint/UL TCI state may be applied to an SRS resource (set) with other usage.

### {Variation 1}

When only one SRS resource set (for example, SRS resource set for CB/NCB usage) is configured/indicated, the UE may not assume that two indicated joint/UL TCI states are indicated.

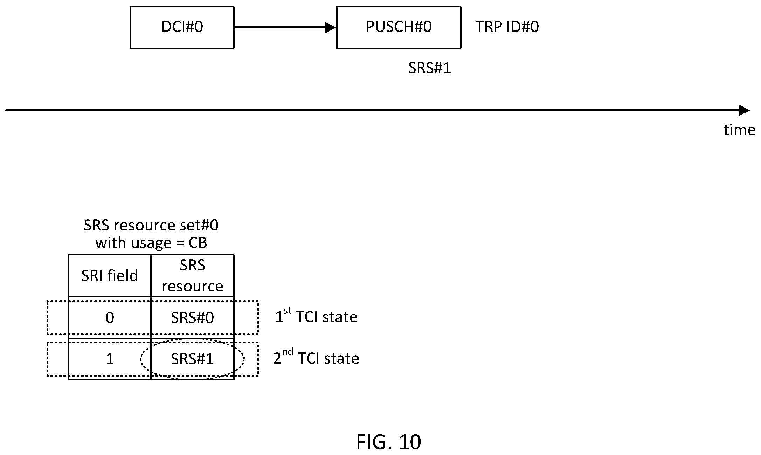

When only one SRS resource set (for example, SRS resource set for CB/NCB usage) is configured, separate indicated joint/UL TCI states may be applied/allocated to different respective SRS resources of one SRS resource set. For example, an SRS resource with a smaller codepoint of an SRI field of the DCI and an SRS resource with a larger codepoint of the SRI field may correspond to a first indicated joint/UL TCI state and a second indicated joint/UL TCI state, respectively (see FIG. 10).

The smaller codepoint may mean codepoint 0 (for example, CB usage) or codepoint 0/1 (for example, NCB usage). The larger codepoint may mean codepoint 1 (for example, CB usage) or codepoint 2/3 (for example, NCB usage). Here, the SRI field having 1 or 2 bits has been described, but is not restrictive.

FIG. 10 shows an example of a case where when only one SRS resource set #0 is configured/indicated, SRS resource #0 and SRS resource #1 included in SRS resource set #0 correspond to different TCI states. FIG. 10 shows a case where SRS resource #0 corresponding to codepoint 0 and SRS resource #1 corresponding to codepoint 1 correspond to a first TCI state and a second TCI state, respectively.

Thus, different TCI states are allocated to a plurality of SRS resources included in the same SRS resource set, thereby enabling switching between joint/UL TCI states to be performed by using an SRI field even when only one SRS resource set is configured.

### {Variation 2}

When two SRS resource sets (for example, SRS resource sets for CB/NCB usage) are configured, different indicated joint/UL TCI states may be applied/allocated to a plurality of respective SRS resources of the same SRS resource set.

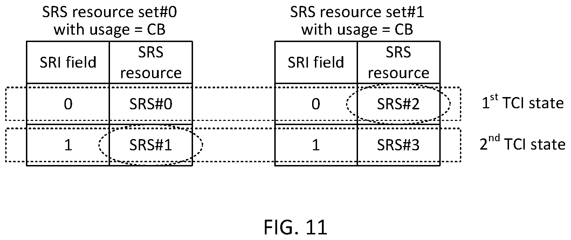

For example, an SRS resource with a smaller codepoint of an SRI field of the DCI and an SRS resource with a larger codepoint of the SRI field may correspond to a first indicated joint/UL TCI state and a second indicated joint/UL TCI state, respectively (see FIG. 11).

The smaller codepoint may mean codepoint 0 (for example, CB usage) or codepoint 0/1 (for example, NCB usage). The larger codepoint may mean codepoint 1 (for example, CB usage) or codepoint 2/3 (for example, NCB usage). Here, the SRI field having 1 or 2 bits has been described, but is not restrictive.

FIG. 11 shows an example of a case where when one SRS resource set #0 and one SRS resource set #1 are configured/indicated, a plurality of (here, two) SRS resources included in each SRS resource set correspond to different TCI states. Specifically, SRS resource #0 and SRS resource #1 included in SRS resource set #0 correspond to different respective TCI states, and SRS resource #2 and SRS resource #3 included in SRS resource set #1 correspond to different respective TCI states.

FIG. 11 shows a case where the same TCI state corresponds to the same codepoint for SRS resource set #0 and SRS resource set #1 (for example, a first TCI state corresponds to codepoint 0 / a second TCI state corresponds to codepoint 1), but is not limited to this. The TCI states corresponding to the SRS resources included in each SRS resource set may be configured separately by RRC or the like.

### <Second Embodiment>

In a second embodiment, an example of configuration/application of a unified TCI state for single-DCI based multi-TRP will be described. For example, the second embodiment can be suitably applied to a case where CORESET pool indices are used for single-DCI based multi-TRP and where indication of an indicated TCI state for each of a plurality of (for example, two) CORESET pool indices is supported. The CORESET pool indices may be interpreted as TRP indices.

TRP identifiers (for example, TRP IDs) may be associated with respective channels / resources / resource sets / reference signals. An association between the TRP IDs and the respective channels / resources / resource sets may be configured by higher layer signaling. Alternatively, the association between the TRP IDs and the respective channels / resources / resource sets / reference signals may be performed implicitly) based on a certain rule.

The TRP IDs may be CORESET pool indices. As the CORESET pool indices, a first CORESET pool index (for example, index 0) and a second CORESET pool index (for example, index 1) may be defined. Note that the number of CORESET pool indices is not limited to two, and three or more CORESET pool indices may be defined/supported.

For example, first CORESET pool index #0 and second CORESET pool index #1 may correspond to a first TRP and a second TRP, respectively. When two TRPs are supported/configured, the first TRP may be a TRP with a lower index (for example, TRP ID = 0). The second TRP may be a TRP with a higher index (for example, TRP ID = 1).

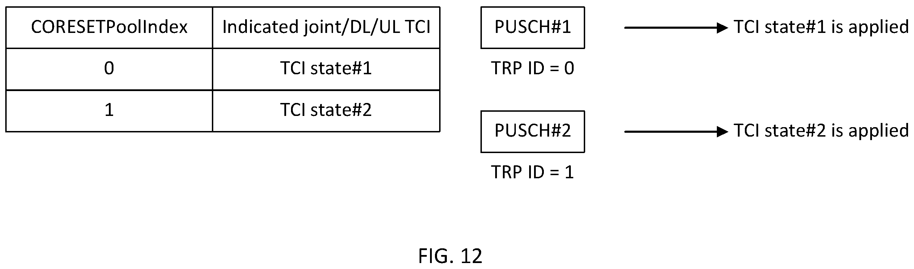

For example, assume a case where first TCI state #1 and second TCI state #2 correspond to first CORESET pool index #0 (or first TRP #0) and second CORESET pool index #1 (or first TRP #1), respectively (see FIG. 12). In this case, first TCI state #1 and second TCI state #1 may be indicated by a PDCCH/DCI transmitted with first CORESET pool index #0 and a PDCCH/DCI transmitted with second CORESET pool index #1, respectively.

In this case, first TCI state #1 may be applied to a channel / resource / resource set / reference signal associated with first CORESET pool index #0 (or first TRP #0) (see FIG. 12). FIG. 12 shows a case where first TCI state #1 is applied to PUSCH #1 transmitted to first TRP #0 (or PUSCH #1 corresponding to first TRP #0).

On the other hand, second TCI state #2 may be applied to a channel / resource / resource set / reference signal associated with second CORESET pool index #1 (or second TRP #1).

The TRP IDs may be certain IDs (for example, new IDs). Each certain ID may be associated with a different timing advance (TA). For example, different TAs may be applied to UL transmissions associated with different respective IDs. Alternatively, UL transmissions associated with different respective IDs may belong to different timing advance groups (TAGs).

Likewise, each CORESET pool index may be associated with a different timing advance (TA). For example, different TAs may be applied to UL transmissions associated with different respective CORESET pool indices. Alternatively, UL transmissions associated with different respective CORESET pool indices may belong to different timing advance groups (TAGs).

An example of the association between the TRP IDs (or CORESET pool indices / certain IDs) and the channels / resources / resource sets / reference signals will be described below.

### {Dynamic PUSCH}

A TRP ID (or CORESET pool index) associated with a dynamic PUSCH may be determined based on at least one of the following cases.

### <<Case 1>>

The TRP ID may be associated with a scheduling PDCCH / search space (or search space set) / CORESET. The association may be configured/activated/indicated by RRC / MAC CE.

For example, when a scheduling PDCCH (or scheduling DCI) for the dynamic PUSCH is associated with a TRP ID = 0, the PUSCH scheduled by the PDCCH may be associated with the TRP ID = 0.

### <<Case 2>>

The TRP ID may be indicated by scheduling DCI. For example, the TRP ID may be indicated by a new DCI field or an existing DCI field of scheduling DCI (for example, DCI format 0_1/0_2).

### <<Case 3>>

The TRP ID may be associated with a TCI state indicated for a PUSCH. The association may be configured/activated/indicated by RRC / MAC CE.

### <<Case 4>>

The TRP ID may be associated with an SRI. Alternatively, the TRP ID may be associated with an SRS resource / SRS resource set indicated for a PUSCH. The association may be configured/activated/indicated by RRC / MAC CE. Note that the SRS resource / SRS resource set may correspond to an SRS for certain usage (for example, CB/NCB).

The TRP ID may be configured for each SRS resource set. The SRS resource set may be associated with usage = CB/NCB. Alternatively, the lowest/highest SRS resource set ID may be implicitly associated with a certain TRP ID (for example, TRP ID = {0, 1}).

### <<Case 5>>

TPC-related parameters for the dynamic PUSCH may be, for example, a pass loss reference signal (for example, a PL-RS), a certain parameter (for example, P0, alpha), and a closed loop index.

The PDCCH / CORESET / TCI state / SRI / SRS resource / SRS resource set described above may be configured/activated/indicated by RRC / MAC CE / DCI.

Note that when a plurality of TCI states / SRIs / SRS resources / SRS resource sets are indicated for the dynamic PUSCH, a TRP ID associated with the dynamic PUSCH may be associated with at least one of the plurality of TCI states / SRIs / SRS resources / SRS resource sets. For example, when two TCI states are indicated for the dynamic PUSCH, a TRP ID associated with the dynamic PUSCH may be associated with at least one of a first TCI state and a second TCI state of the two TCI states.

The UE determines/selects, based on one of the association rules described above, a joint/UL TCI state to be applied to the dynamic PUSCH.

### {Configured Grant PUSCH}

A TRP ID (or CORESET pool index) associated with a configured grant PUSCH may be determined based on at least one of the following cases.

### <<Case 1>>

The TRP ID may be associated with a configured grant configuration. The association may be configured/activated/indicated by RRC / MAC CE.

The TRP ID may be configured in a higher layer parameter related to a configured grant (for example, ConfiguredGrantConfig). Alternatively, the TRP ID may be associated with ConfiguredGrantConfigIndex.

### <<Case 2>>

For a type 2 configured grant, the TRP ID may be associated with a PDCCH / search space (or search space set) / CORESET for transmitting DCI that performs activation. The association may be configured/activated/indicated by RRC / MAC CE.

### <<Case 3>>

The TRP ID may be indicated by DCI that performs activation.

### <<Case 4>>

The TRP ID may be associated with a TCI state indicated for a PUSCH. The association may be configured/activated/indicated by RRC / MAC CE.

### <<Case 5>>

The TRP ID may be associated with an SRI. Alternatively, the TRP ID may be associated with an SRS resource / SRS resource set indicated for a PUSCH. The association may be configured/activated/indicated by RRC / MAC CE. Note that the SRS resource / SRS resource set may correspond to an SRS for certain usage (for example, CB/NCB).

The TRP ID may be configured for each SRS resource set. The SRS resource set may be associated with usage = CB/NCB. Alternatively, the lowest/highest SRS resource set ID may be implicitly associated with a certain TRP ID (for example, TRP ID = {0, 1}).

### <<Case 6>>

The TRP ID may be a predefined value / fixed value. For example, for a configured grant, the TRP ID may be fixed to a specific value (for example, 0). This may mean that only one indicated joint/DL TCI state can be applied to all the PUSCHs.

The configured grant configuration / PDCCH / CORESET / TCI state / SRI / SRS resource / SRS resource set described above may be configured/activated/indicated by RRC / MAC CE / DCI.

Note that when a plurality of TCI states / SRIs / SRS resources / SRS resource sets are indicated for the configured grant PUSCH, a TRP ID associated with the configured grant PUSCH may be associated with at least one of the plurality of TCI states / SRIs / SRS resources / SRS resource sets.

The UE determines/selects, based on one of the association rules described above, a joint/UL TCI state to be applied to the configured grant PUSCH.

### {PUCCH}

A TRP ID (or CORESET pool index) associated with a PUCCH may be determined based on at least one of the following cases.

### <<Case 1>>

When a PUCCH resource / PUCCH transmission is indicated/triggered by DCI, the TRP ID may be associated with a PDCCH / search space (or search space set) / CORESET for transmitting the DCI. The association may be configured/activated/indicated by RRC / MAC CE.

Alternatively, the TRP ID may be indicated by DCI for indicating/triggering a PUCCH resource / PUCCH transmission.

### <<Case 2>>

The TRP ID may be associated with a PUCCH resource. The association may be configured/activated/indicated by RRC / MAC CE.

Alternatively, PUCCH resource groups may be configured, and different timing advances may be applied to different PUCCH resource groups. A plurality of (for example, two) PCCH resource groups may be configured for / associated with two respective TRPs.

### <<Case 3>>

The TRP ID may be associated with a TCI state or spatial relation information indicated for a PUCCH. The association may be configured/activated/indicated by RRC / MAC CE.

### <<Case 4>>

The TRP ID may be associated with UCI transmitted by a PUCCH. For example, the TRP ID may be associated with a HARQ (or PDSCH corresponding to a HARQ), an SR, or a CSI report.

### <<Case 5>>

TPC-related parameters for the dynamic PUCCH may be, for example, a pass loss reference signal (for example, a PL-RS), a certain parameter (for example, P0, alpha), and a closed loop index.

### <<Case 6>>

The TRP ID may be a predefined value / fixed value. For example, for a PUCCH, the TRP ID may be fixed to a specific value (for example, 0). This may mean that only one indicated joint/DL TCI state can be applied to all the PUCCHs.

The association (correspondence) between the PUCCH and the TRP ID may differ for each PUCCH format. The association (correspondence) between the PUCCH and the TRP ID may differ for PUCCHs for different UCI types (in other words, the association between the PUCCH and the TRP ID may differ between a PUCCH for a first UCI type and a PUCCH for a second UCI type).

The UE determines/selects, based on one of the association rules described above, a joint/UL TCI state to be applied to the PUCCH.

### {SRS}

A TRP ID (or CORESET pool index) associated with an SRS may be determined based on at least one of the following cases.

### <<Case 1>>

When an SRS is triggered by DCI (for example, in a case of an aperiodic SRS), the TRP ID may be associated with a PDCCH / search space (or search space set) / CORESET for transmitting the DCI. The association may be configured/activated/indicated by RRC / MAC

### CE.

Alternatively, the TRP ID may be indicated by DCI for triggering an SRS.

### <<Case 2>>

The TRP ID may be associated with an SRS resource / SRS resource set. The association may be configured/activated/indicated by RRC / MAC CE.

Alternatively, the association between the TRP ID and the SRS resource / SRS resource set may be predefined. For example, for a codebook (CB)/non-codebook (NCB) SRS, when two SRS resource sets are configured for two TRPs, the two SRS resource sets may be associated with two respective TRP IDs. A first SRS resource set (for example, an SRS resource set with a lower ID) and a second SRS resource set (for example, an SRS resource set with a higher ID) may be associated with first TRP #0 and second TRP #1, respectively.

### <<Case 3>>

The TRP ID may be associated with a TCI state or spatial relation information indicated for an SRS. The association may be configured/activated/indicated by RRC / MAC CE.

### <<Case 4>>

TPC-related parameters for the SRS may be, for example, a pass loss reference signal (for example, a PL-RS), a certain parameter (for example, P0, alpha), and a closed loop index.

### <<Case 5>>

The TRP ID may be a predefined value / fixed value. For example, for an SRS, the TRP ID may be fixed to a specific value (for example, 0). This may mean that only one indicated joint/DL TCI state can be applied to all the SRSs.

Note that the association (correspondence) between the SRS and the TRP ID may differ for each usage of an SRS resource set corresponding to the SRS. For example, different TRP ID correspondence may be used for each (or some) of codebook, non-codebook, beam management, antenna switching, and positioning usages.

The association (correspondence) between the SRS and the TRP ID may be differ for each behavior (for example, periodic, semi-persistent, aperiodic) of the time domain for an SRS resource set corresponding to the SRS.

The UE determines/selects, based on one of the association rules described above, a joint/UL TCI state to be applied to the SRS.

### {CSI-RS}

A TRP ID associated with a CSI-RS may be determined based on at least one of the following cases.

### <<Case 1>>

When a CSI-RS is triggered by DCI (for example, an A-CSI-RS), the TRP ID may be associated with a PDCCH / CORESET / search space set for transmitting the DCI. The association may be configured/activated/indicated by RRC / MAC CE.

Alternatively, when a CSI-RS is triggered by DCI (for example, an A-CSI-RS), the TRP ID may be indicated by the DCI.

### <<Case 2>>

The TRP ID may be associated with a CSI-RS resource / CSI-RS resource set. The association may be configured/activated/indicated by RRC / MAC CE.

Alternatively, the association between the TRP ID and the CSI-RS resource / CSI-RS resource set may be predefined. A CSI-RS resource ID / CSI-RS resource set ID with a lower/higher ID may be associated with TRP ID #0. Another CSI-RS resource ID / CSI-RS resource set ID may be associated with TRP ID #1.

### <<Case 3>>

The TRP ID may be associated with a TCI state or spatial relation information indicated for an A-CSI-RS. The association may be configured/activated/indicated by RRC / MAC CE.

### <<Case 4>>

The TRP ID may be predefined / fixed. For example, the TRP ID associated with the CSI-RS may be a specific value (for example, 0). This may mean that only one indicated joint/DL TCI state can be applied to all the CSI-RSs.

### <<Case 5>>

An indicated joint/DL TCI state may be applied to a specific CSI-RS. The specific CSI-RS may be, for example, at least one of an A/SP/P CSI-RS, a CSI-RS with/without repetition, a CSI-RS with/without trs information (trs-info), a CSI-RS for mobility, and a CSI-RS for BM/CSI.

For the CSI-RS, different options (or cases) may be applied to different purposes (for example, a CSI-RS with/without repetition, a CSI-RS with/without trs information (trs-info), a CSI-RS for mobility). Different options (or cases) may be applied to different CSI-RSs with different time domain operations (for example, periodic/semi-persistent/aperiodic).

The UE determines/selects, based on one of the association rules described above, a joint/UL TCI state to be applied to the CSI-RS.

### {PDCCH}

For PDCCHs in single-DCI based multi-TRP, the UE may apply, to PDCCHs in CORESETs associated with the same CORESET pool index value, an indicated joint/DL TCI state specific to the CORESET pool index value.

In this case, the indicated joint/DL TCI state may or may not be applied to all the PDCCHs. For example, the indicated joint/DL TCI state may not be applied to some CORESETs (or may be applied only to some CORESETs).

When a joint/DL TCI state is configured, and a CORESET pool index is configured for at least one CORESET, indication of one joint/DL TCI state for each CORESET pool index (= {0, 1}) may be supported.

In this case, at least one of the following rules may be applied to a PDCCH.

### <<Rule 1>>

The indicated TCI state may be applied to a specific CORESET (for example, CORESET #0) if a higher layer parameter indicating that a unified TCI state is to be followed (for example, followUnifiedTCIstate) is configured for the specific CORESET. Otherwise, a mechanism for an existing system (for example, Rel. 15) may be applied to the specific CORESET. For example, the mechanism for the existing system (for example, Rel. 15) may allow the specific CORESET to follow a TCI state activated by a MAC CE or to be QCLed with an SSB.

### <<Rule 2>>

Alternatively, the indicated TCI state may always be applied to a CORESET with USS/CSS type 3 and other than a specific CORESET (for example, CORESET #0).

### <<Rule 3>>

Alternatively, the indicated TCI state may be applied to a CORESET with at least a CSS of a type other than CSS type 3 and other than a specific CORESET (for example, CORESET #0) when followUnifiedTCIstate is configured for the CORESET. Otherwise, a configured TCI state for the CORESET may be applied to the CORESET.

Note that a rule different from rules 1 to 3 described above may be applied. For example, the same rule as / rule different from rule 1/2/3 may be applied depending on a certain condition. The certain condition may be one of the following:
- which CORESET the CORESET is (for example, whether the CORESET is a specific CORESET (CORESET #0));
- which search space type the CORESET corresponds to (for example, whether the CORESET corresponds to a CSS or a USS, whether the CORESET corresponds to CSS type 0/0A/1/2/3 in a case of a CSS); and
- whether a higher layer parameter indicating that a unified TCI state is to be followed (for example, followUnifiedTCIstate) is configured for the CORESET.

Alternatively, the indicated TCI state associated with the corresponding CORESET pool index may be applied to all the CORESETs/PDCCHs irrespective of configuration (for example, CSS/USS/followUnifiedTCIstate/CORESET#0).

### {PDSCH}

When a joint/DL TCI state is configured, and a CORESET pool index is configured for at least one CORESET, indication of one joint/DL TCI state for each CORESET pool index (= {0, 1}) may be supported.

In this case, for a PDSCH, QCL assumption for the PDSCH (or an indicated TCI state to be applied to the PDSCH) may be controlled based on a relationship between a scheduling offset and a threshold indicating a time period for QCL (for example, timeDurationForQCL).

In a case where scheduling offset < timeDurationForQCL, when the indicated TCI state is associated with a serving cell PCI irrespective of a CORESET for scheduling the PDSCH (for example, scheduling CORESET), an indicated TCI state associated with a CORESET pool index may be applied to the scheduled PDSCH. Otherwise (for example, a case where the indicated TCI state is not associated with a serving cell PCI), a default QCL rule of an existing system (for example, Rel. 16) may be applied. When the default QCL rule is applied, QCL corresponding to the lowest CORESET ID with the same CORESET pool index in the latest monitoring slot may be applied to the scheduled PDSCH.

When scheduling offset ≥ timeDurationForQCL, QCL assumption for the PDSCH may be the same as QCL assumption for the scheduling CORESET. This may mean that the QCL assumption depends on QCL assumption used for the scheduling CORESET.

### {followUnifiedTCIstate}

For each channel/signal, configuration/application of a higher layer parameter indicating that a unified TCI state is to be followed (for example, followUnifiedTCIstate) may be enhanced.

### <<PUSCH>>

The higher layer parameter (for example, followUnifiedTCIstate) may not be defined for a PUSCH. For example, all/some PUSCHs may follow an indicated joint/UL TCI state.

Alternatively, the higher layer parameter (for example, followUnifiedTCIstate) may be configurable/supported in a PUSCH configuration (for example, PUSCH-Config) / scheduling CORESET. For example, the associated PUSCH may follow an indicated joint/UL TCI state when the higher layer parameter is configured, otherwise the PUSCH may follow a configured joint/UL TCI state.

### <<PUCCH>>

The higher layer parameter (for example, followUnifiedTCIstate) may not be defined for a PUCCH. For example, all/some PUCCHs may follow an indicated joint/UL TCI state.

Alternatively, the higher layer parameter (for example, followUnifiedTCIstate) may be configurable/supported in a PUCCH configuration (for example, PUCCH-Config) / scheduling CORESET. For example, the associated PUCCH may follow an indicated joint/UL TCI state when the higher layer parameter is configured, otherwise the PUSCH may follow a configured joint/UL TCI state.

### <<SRS>>

The higher layer parameter (for example, followUnifiedTCIstate) may not be defined for an SRS. For example, all/some SRSs may follow an indicated joint/UL TCI state.

Alternatively, the higher layer parameter (for example, followUnifiedTCIstate) may be configurable/supported in an SRS configuration (for example, SRS-Config) / triggering CORESET. For example, the associated SRS may follow an indicated joint/UL TCI state when the higher layer parameter is configured, otherwise the PUSCH may follow a configured joint/UL TCI state.

Note that only an SRS of a limited type (for example, only some SRSs) may follow an indicated joint/UL TCI state. The some SRSs may be an SRS used for at least one of codebook, non-codebook, beam management, antenna switching, or positioning. Alternatively, the some SRSs may be at least one of a periodic SRS, a semi-persistent SRS, or an aperiodic SRS with different time domain operations.

### <<PDCCH>>

The higher layer parameter (for example, followUnifiedTCIstate) may not be defined for a PDCCH. For example, all/some CORESETs (or PDCCHs corresponding to the CORESETs) may follow an indicated joint/UL TCI state.

Alternatively, the higher layer parameter (for example, followUnifiedTCIstate) may be configurable/supported in a PDCCH configuration (for example, PDCCH-Config) / CORESET / search space (or search space set). For example, the associated PDCCH / CORESET / search space (or search space set) may follow an indicated joint/UL TCI state when the higher layer parameter is configured, otherwise the PDCCH / CORESET / search space (or search space set) may follow a configured joint/UL TCI state.

Note that only a PDCCH / CORESET / search space (or search space set) of a limited type (for example, only some PDCCHs / CORESETs / search spaces (or search space sets)) may follow an indicated joint/UL TCI state. The some PDCCHs / CORESETs / search spaces (or search space sets) may be a specific CORESET (for example, CORESET #0) / CORESET other than CORESET #0 / CSS / USS. In a case of the CSS, at least one of CSS types 0/0A/1/2/3 may be further selected for some search space sets.

### <<PDSCH>>

The higher layer parameter (for example, followUnifiedTCIstate) may not be defined for a PDSCH. For example, all/some PDSCHs may follow an indicated joint/UL TCI state.

Alternatively, the higher layer parameter (for example, followUnifiedTCIstate) may be configurable/supported in a PDSCH configuration (for example, PDSCH-Config) / scheduling CORESET. For example, the associated PDSCH may follow an indicated joint/UL TCI state when the higher layer parameter is configured, otherwise the PDSCH may follow a configured joint/UL TCI state.

### <Third Embodiment>

In a third embodiment, an example of timing advance control in single-DCI based multi-TRP will be described.

### {TA/TAG}

Using a plurality of TRPs also leads to a case where distances between a UE and respective TRPs are different from each other. The plurality of TRPs may be included in the same cell (for example, a serving cell). Alternatively, a certain TRP and another TRP of the plurality of TRPs may correspond to a serving cell and a non-serving cell, respectively. In this case, it is also assumed that distances between the respective TRPs and the UE are different from each other.

In an existing system, a transmission timing of a UL (Uplink) channel and/or a UL signal (UL channel/signal) is adjusted by a timing advance (TA). Reception timings of respective UL channels/signals from different user terminals (UEs) are adjusted on a radio base station (also referred to as a TRP (Transmission and Reception Point), a gNB (gNodeB), or the like) side.

The UE may apply a timing advance (multiple timing advances) to each preconfigured timing advance group (TAG) to perform timing control of UL transmission.

When the multiple timing advances are applied, timing advance groups (TAGs) classified by transmission timings are supported. The UE may control a UL transmission timing in each TAG by assuming that the same TA offset (or TA value) is applied to each TAG. In other words, a TA offset may be configured independently for each TAG.

When the multiple timing advances are applied, the UE independently adjusts a transmission timing in a cell belonging to each TAG, thereby enabling reception timings of uplink signals from the UE to be matched with each other in a radio base station even when a plurality of cells are used.

The TAG (for example, serving cells belonging to the same TAG) may be configured by a higher layer parameter. The same timing advance value may be applied to serving cells belonging to the same TAG. A timing advance group including an SpCell of a MAC entity may be referred to as a primary timing advance group (PTAG), and a TAG other than the timing advance group may be referred to as a secondary timing advance group (STAG).

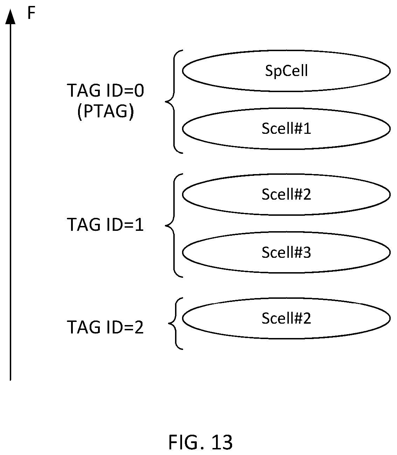

An existing system (for example, Rel-16 NR) supports configuration of up to four TAGs for each cell group (for example, MCG/SCG) (see FIG. 13). FIG. 13 shows a case where three TAGs are configured for a cell group including an SpCell and SCells #1 to #4. FIG. 13 shows a case where the SpCell and SCell #1, SCell #2 and SCell #3, and SCell #4 belong to a first TAG (PTAG or TAG #0), a second TAG (TAG #1), and a third TAG (TAG #2), respectively.

The UE may be notified of a timing advance command (TA command) by using a MAC control element (for example, a MAC CE). The TA command is a command indicating an uplink channel transmission timing value, and is included in the MAC control element. The TA command is signaled from the radio base station to the UE by using a MAC layer. The UE controls a certain timer (for example, a TA timer), based on reception of the TA command.

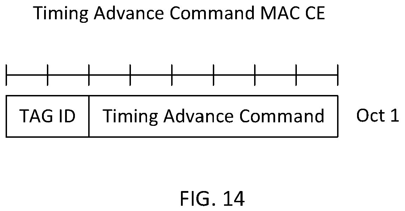

A timing advance command MAC CE (TAC MAC CE) may include a field for a timing advance group index (for example, a TAG ID) and a field for a timing advance command (see FIG. 14).

In single-DCI based multi-TRP, an association between a TAG and a UL channel/signal may be controlled depending on whether a unified TCI state is configured/applied. For example, when the unified TCI state (for example, a joint/UL TCI state) is configured, the association between the TAG and the UL channel/signal may be used for purposes of both association of a TAG (for example, association between a TAG and a UL channel/signal) and association of an indicated joint/UL TCI state (for example, association between an indicated joint/UL TCI state and a UL channel/signal). Note that an association between a TAG and a TCI state / CORESET pool index may be predefined/preconfigured, or may be configured for the UE by the base station by using an RRC parameter.

For single-DCI based multi-TRP operation, at least one of option 3-1 to option 3-4 below may be applied to associate a TAG with a target UL channel/signal.

### {Option 3-1}

The TAG may be associated with a TCI state / spatial relation.

For example, a TAG ID may be configured as part of a joint/UL TCI state (or spatial relation). A TAG ID associated with a joint/UL TCI state (or spatial relation) may be used for UL transmission.

### {Option 3-2}

The TAG may be associated with a CORESET pool index (or TRP index).

For a PUSCH to be dynamically scheduled/activated, a TAG associated with a CORESET pool index of a CORESET for transmitting a PDCCH for scheduling/activating the PUSCH may be applied to UL transmission (for example, the PUSCH).

For at least one of a type 1 configured grant PUSCH, a periodic/semi-persistent SRS, or a periodic/semi-persistent PUCCH, a CORESET pool index may be configured by an RRC parameter.

### {Option 3-3}

The TAG may be associated with an SSB group.

For UL transmission, the UE may adopt a TAG associated with an SSB group. When a path loss reference signal (PL RS) is an SSB, the UE may adopt a TAG associated with an SSB group to which the PL RS for UL transmission belongs. When the PL RS is a CSI-RS, the UE may adopt a TAG associated with an SSB group to which a QCL source SSB of the PL RS belongs.

### {Option 3-4}

The association of the TAG may be performed as follows:
- for a dynamically scheduled/activated channel/signal, a TAG associated with a CORESET pool index of a CORESET for transmitting a scheduling PDCCH is used for UL transmission;
- for a periodic/semi-persistent UL channel/signal (when not scheduled/activated by DCI), a TAG ID may be configured by an RRC parameter.

In option 3-4, for all the dynamically scheduled/activated channels/signals, the association of the TAG may be performed based on a CORESET pool index for a scheduling/activation PDCCH.

In options 3-1/3-2/3-4, an association between a "TAG" and a "TCI state or CORESET pool index" is assumed.

Assume a case where for single-DCI based multi-TRP, a plurality of (for example, two) timing advances (for example, TAs) are configured and CORESET pool indices are configured.

In such a case, when a joint/UL TCI state is configured, an association between a TRP ID (or CORESET pool index) and each channel / resource / resource set / reference signal may be used for purposes of both selection/determination of one indicated joint/UL TCI state and determination of a TA for each channel / reference signal.

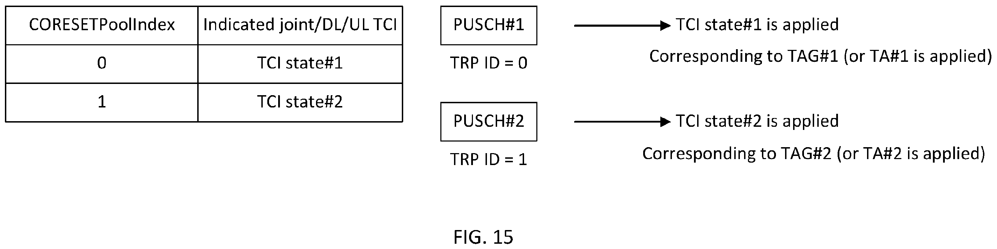

When a plurality of (for example, two) timing advances (for example, TAs) are configured and CORESET pool indices are configured, for single-DCI based multi-TRP, a different timing advance (TA) may be associated with each TRP ID (or CORESET pool index). For example, different TAs may be applied to UL transmissions (for example, UL channels/signals) associated with different TRP IDs (or CORESET pool indices) (see FIG. 15). FIG. 15 shows a case where different TAs are applied to UL transmissions (here, PUSCH #1 and PUSCH #2) corresponding to different TRP IDs (or CORESET pool indices) or where the UL transmissions belong to different TAGs.

Alternatively, in a case where a plurality of (for example, two) timing advances (for example, TAs) are configured and CORESET pool indices are configured, for single-DCI based multi-TRP, when a joint/UL TCI state is not configured, an association between a TRP ID (or CORESET pool index) and each channel / resource / resource set / reference signal may be used for a purpose of determination of only a TA.

"When the joint/UL TCI state is configured" may be interpreted as "when a higher layer parameter indicating that a unified TCI state is to be followed (for example, followUnifiedTCIstate) is configured. "When the joint/UL TCI state is not configured" may be interpreted as "when a higher layer parameter indicating that a unified TCI state is to be followed (for example, followUnifiedTCIstate) is not configured.

### <Fourth Embodiment>

In a fourth embodiment, an example of transmission control in simultaneous UL transmission using a plurality of panels (for example, simultaneous multi-panel UL transmission (SiMPUL), simultaneous UL transmission from multiple panels (STxMP)) will be described.

The present embodiment may be applied to single-DCI based multi-TRP using a CORESET pool index. The CORESET pool index may be interpreted as a TRP index. In the following description, operation in multi-DCI based multi-TRP may be applied to single-DCI based multi-TRP. In this case, it may be interpreted that PUSCH #0 and PUSCH #1 are scheduled/activated/triggered by one of multi-DCI (for example, first DCI #0 or second DCI #1). One piece of DCI may indicate a plurality of (for example, two) SRS resource sets (or SRS resources) for a UE.

### {Simultaneous Multi-panel UL Transmission (SiMPUL)}

In future radio communication systems (for example, Rel. 18 (or later versions)), to improve UL throughput/reliability, simultaneous UL transmission using a plurality of panels (for example, simultaneous multi-panel UL transmission (SiMPUL), simultaneous UL transmission from multiple panels (STxMP)) may be supported for one or more transmission/reception points (TRPs).

In the present disclosure, simultaneous UL transmission using a plurality of panels, STxMP, SiMPUL, and UL transmission using multiple panels in the same time domain may be interchangeably interpreted.

In the present disclosure, a panel, a reception panel, a UE panel, a UE capability value, a UE capability value set, a panel group, and the like may be interchangeably interpreted.

### <<PUSCH with Single-DCI Based Multi-TRP>>

It is studied that an STxMP PUSCH with single-DCI based multi-TRP is transmitted by using the following transmission schemes:
- SDM (space division multiplexing) scheme;
- FDM (frequency division multiplexing)-B scheme;
- FDM-A scheme;
- SFN (single frequency network) based transmission scheme; and
- SDM repetition scheme.

The SDM scheme may be a scheme in which different layers / DMRS ports for one PUSCH are separately precoded and simultaneously transmitted from different UE panels.

The FDM-B scheme may be a scheme in which a plurality of (two) PUSCHs (transmission occasions) with the same/different redundant versions (RVs) of the same transport block (TB) are transmitted from different UE panels in non-overlapping frequency domain resources and the same time domain resources.

The FDM-A scheme may be a scheme in which different parts of one PUSCH (transmission occasion) in a frequency domain resource are transmitted from different UE panels.

The SFN based transmission scheme may be a scheme in which all of the same layers / DMRS ports for one PUSCH are simultaneously transmitted from a plurality of (two) different UE panels.

The SDM repetition scheme may be a scheme in which a plurality of (two) PUSCHs (transmission occasions) having different RVs of the same TBs are simultaneously transmitted from a plurality of (two) different UE panels.

### <<PUSCH with Multi-DCI Based Multi-TRP>>

For an STxMP PUSCH with multi-DCI based multi-TRP, a plurality of (two) PUSCHs may be associated with different TRPs. The plurality of different PUSCHs may be transmitted from different UE panels.

A total number of layers for N PUSCHs may be 2×N.

The plurality of PUSCHs may be at least one of a PUSCH scheduled by DCI, a configured grant PUSCH, or a PUSCH for message 3 / message **A.**

The plurality of PUSCHs may fully/partially overlap each other in the time domain, may fully/partially overlap each other in the frequency domain, or may not overlap each other in the frequency domain.

### <<PUCCH with Single-DCI Based Multi-TRP>>

It is studied that an STxMP PUCCH with single-DCI based multi-TRP is transmitted by using the following transmission schemes:
- FDM-A scheme;
- FDM-B scheme; and
- SFN based transmission scheme.

The FDM-A scheme may be a scheme in which different frequency domain parts of one PUCCH resource are transmitted from different UE panels.

The FDM-B scheme may be a scheme in which a plurality of (two) FDMed PUCCHs (transmission occasions) of the same UCI are simultaneously transmitted from different UE panels by using the same PUCCH formats.

The SFN based transmission scheme may be a scheme in which the same PUCCHs / DMRSs for PUCCHs are simultaneously transmitted from different UE panels.

For the above-described respective schemes, specific PUCCH formats to be supported are under study.

### <<PUCCH with Multi-DCI Based Multi-TRP>>

For an STxMP PUCCH with multi-DCI based multi-TRP, a plurality of (two) PUCCHs may be associated with different TRPs. The plurality of different PUCCHs may be transmitted from different UE panels.

The plurality of PUCCHs may fully/partially overlap each other in the time domain.

In the multi-DCI based multi-TRP, simultaneous UL transmissions of PUSCH+PUSCH, PUCCH+PUCCH, and PUSCH+PUCCH are supported.

### {Multi-DCI Based STxMP PUSCH}

Different pieces of DCI associated with different CORESET pool indices may schedule different PUSCHs by using different UE panels. This case enables two PUSCHs to be transmitted simultaneously. In single-DCI based PUSCH transmission using a CORESET pool index (or TRP index), one piece of DCI may schedule different PUSCHs.

Each PUSCH may be associated with one SRS resource set with certain usage (for example, usage = CB/NCB). At least one of different SRIs or different joint/UL TCI states may be associated with different PUSCHs associated with different CORESET pool indices.

For TPMI/SRI indication in multi-DCI based simultaneous UL transmission (for example, multi-DCI based STxMP PUSCH+PUSCH), a plurality of (for example, two) SRS resource sets may be configured for certain usage (for example, CB or NCB). In this case, a TRP ID (or CORESET pool index) may be associated with each SRS resource set.

For example, first TRP #0 (or first CORESET pool index #0) may be associated with an SRS resource set having a lower ID (or a higher ID) from among a plurality of (for example, two) SRS resource sets with certain usage (CB/NCB). On the other hand, second TRP #1 (or second CORESET pool index #1) may be associated with another SRS resource set with certain usage (CB/NCB).

Alternatively, a TRP ID (or CORESET pool index) associated with each SRS resource set may be configured by a higher layer parameter.

TCI for multi-DCI based multi-TRP may be applied to PUSCHs to which multi-DCI based simultaneous UL transmission is applied.

For example, one SRI/TPMI field of each piece of DCI may indicate an SRI/TPMI of a scheduled PUSCH. In this case, up to two SRS resource sets may be configured. Each piece of DCI associated with a CORESET pool index may indicate an SRI/TPMI of an SRI/TPMI set for the CORESET pool index. In the single-DCI based transmission, one piece of DCI (for example, two fields) may indicate a plurality of SRIs/TPMIs.

A first SRS resource set (for example, an SRS resource set having a lower ID (or higher ID)) and a second SRS resource set (for example, an SRS resource set having a higher ID (or lower ID)) may be associated with TRP ID #0 (or CORESET pool index #0) and TRP ID #1(or CORESET pool index #1), respectively.

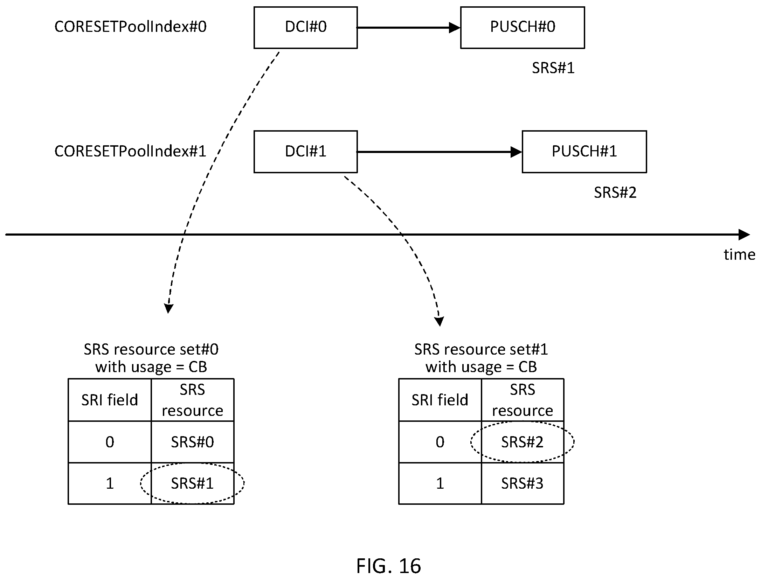

FIG. 16 shows a case where an SRS resource (here, SRS #1) indicated by an SRI field of first DCI #0 is applied to PUSCH #0 scheduled by first DCI #0 associated with first CORESET pool index #0. FIG. 16 shows a case where an SRS resource (here, SRS #2) indicated by an SRI field of second DCI #1 is applied to PUSCH #1 scheduled by second DCI #1 associated with second CORESET pool index #1.

The associations between the SRS resource sets and the CORESET pool indices may be defined in use, or may be configured for the UE by using an RRC parameter. FIG. 16 shows a case where first CORESET pool index #0 and SRS resource set #0 are associated with each other and where second CORESET pool index #1 and SRS resource set #1 are associated with each other.

For the PUSCHs to which the multi-DCI based simultaneous UL transmission is applied, the same joint/UL TCI state may be applied to an SRS resource (for example, an SRS resource with usage = CB/NCB) and a scheduled PUSCH (for example, a PUSCH associated with an SRI). This enables the UE to assume the same UL beam for a PUSCH and an indicated SRI.

When the joint/UL TCI state is configured, at least one of options 4A-1 to 4A-2 below may be applied.

### {Option 4A-1}

An indicated joint/UL TCI state associated with a CORESET pool index (= {0, 1}) may be applied to all the SRS resources in a certain SRS resource set (for example, an SRS resource set with usage = CB/NCB) associated with the same CORESET pool index.

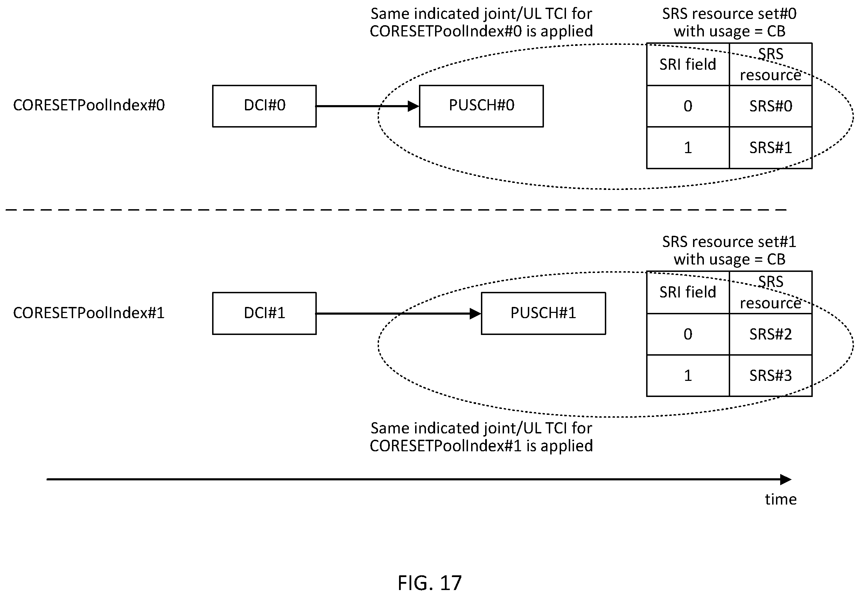

FIG. 17 shows a case where an indicated joint/UL TCI state associated with first CORESET pool index #0 is applied to a plurality of SRS resources (for example, SRS #0, SRS #1) included in SRS resource set #0 (usage = CB) associated with first CORESET pool index #0. The indicated joint/UL TCI state may be applied to DCI #0, PUSCH #0, SRS #0, and SRS #1.

FIG. 17 shows a case where an indicated joint/UL TCI state associated with second CORESET pool index #1 is applied to a plurality of SRS resources (for example, SRS #2, SRS #3) included in SRS resource set #1 (usage = CB) associated with second CORESET pool index #1. The indicated joint/UL TCI state may be applied to DCI #1, PUSCH #1, SRS #2, and SRS #3.

In this case, scheduling DCI (for example, DCI format 0_1/0_2) fails to control a UL beam by using the DCI, but all of the scheduling DCI, the scheduled PUSCH, and the associated SRS resources have the same joint/UL TCI state, thereby enabling simplified operation to be performed.

### {Option 4A-2}

A plurality of indicated joint/UL TCI states associated with a CORESET pool index (= {0, 1}) may be indicated. One of the plurality of indicated joint/UL TCI states may be applied to each SRS resource. The correspondence (or mapping) between the SRS resource and the indicated joint/UL TCI state may be predefined, or may be configured by a higher layer parameter or the like.

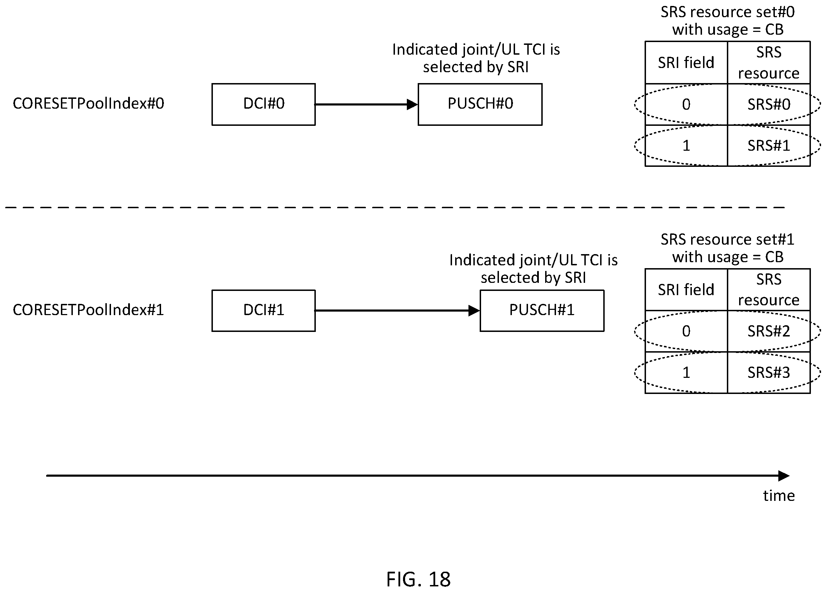

FIG. 18 shows a case where a plurality of (for example, two) indicated joint/UL TCI states for first CORESET pool index #0 are applied to a plurality of respective SRS resources (for example, SRS #0, SRS #1) included in SRS resource set #0 (usage = CB) associated with first CORESET pool index #0. An indicated joint/UL TCI state (and SRS resource) applied by an SRI field included in first DCI #0 used to schedule PUSCH #0 may be indicated for the UE.

FIG. 18 shows a case where a plurality of (for example, two) indicated joint/UL TCI states for second CORESET pool index #1 are applied to a plurality of respective SRS resources (for example, SRS #2, SRS #3) included in SRS resource set #1 (usage = CB) associated with second CORESET pool index #1. An indicated joint/UL TCI state (and SRS resource) applied by an SRI field included in second DCI #1 used to schedule PUSCH #1 may be indicated for the UE.

A different indicated joint/UL TCI state corresponds to each SRS resource in such a manner, thereby enabling an indicated joint/UL TCI state to be applied to be controlled flexibly.

Note that a plurality of indicated TCI states may be indicated for one or more SRS resources in the same SRS resource set.

### {Multi-DCI Based STxMP PUCCH}

For simultaneous UL transmission for multi-DCI (for example, STxMP PUCCH for mDCI), different pieces of DCI associated with different CORESET pool indices may indicate different PUCCH resources having different joint/UL TCI states.

Rel. 16 supports joint ACK/NACK (HARQ-ACK) feedback (mode) and separate ACK/NACK (HARQ-ACK) feedback (mode).

The joint ACK/NACK feedback may be configured in a case where single-DCI based multi-TRP are configured or in a case where multi-DCI based multi-TRP are configured.

The separate ACK/NACK feedback may be configured in a case where multi-DCI based multi-TRP are configured.

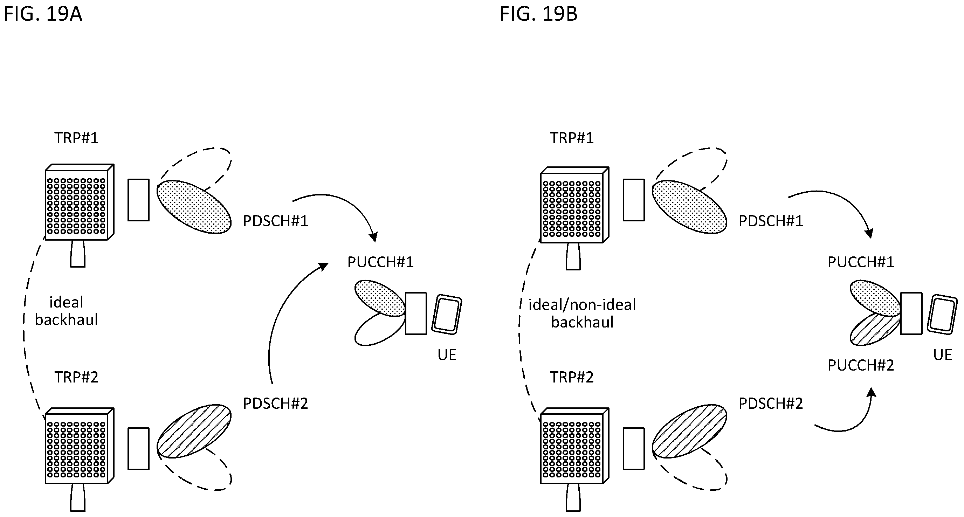

In the joint ACK/NACK feedback, an ACK/NACK for PDSCHs transmitted from a plurality of TRPs is transmitted to one TRP by using one PUCCH resource (see FIG. 19A).

In the separate ACK/NACK feedback, an ACK/NACK for a PDSCH transmitted from each of certain TRPs is transmitted to the TRP by using a certain PUCCH resource, and an ACK/NACK for a PDSCH transmitted from each of other TRPs is transmitted to the other TRPs by using another PUCCH resource (see FIG. 19B).

In Rel. 17, an indicated TCI state is applied to all the UE-specific PUCCH resources.

In this case, for the joint ACK/NACK feedback, UE operation using multi-TRP is available, but the UE always transmits a PUCCH to one beam/TRP, and thus leading to reduced resource use efficiency.

Also, for the separate ACK/NACK feedback, transmission to a certain TRP and transmission to another TRP cannot be performed by using a certain PUCCH resource and another PUCCH resource, respectively, and thus the operation fails.

Therefore, an example of a method for configuring a PUCCH resource in a case where multi-TRP are used and where a common TCI state is indicated will be described below. The UE may determine the PUCCH resource in accordance with at least one of options 4B-1 and 4B-2 below.

### {Option 4B-1}

The PUCCH resource may be determined/selected based on an association between a CORESET pool index and a PUCCH resource / PUCCH resource set / PUCCH configuration (PUCCH-Config).

### <<Option 4B-1-1>>

For each CORESET / SRS resource set (usage = CB/NCB), a PUCCH resource / PUCCH resource set / PUCCH configuration (PUCCH-Config) may be configured for the UE. Note that, in the following description, a CORESET / SRS resource set (usage = CB/NCB) may be interpreted as a TRP / TCI state.

The UE may determine, based on a configuration for each CORESET / SRS resource set (usage = CB/NCB), a PUCCH resource corresponding to a TRP / TCI state and may transmit a HARQ-ACK.

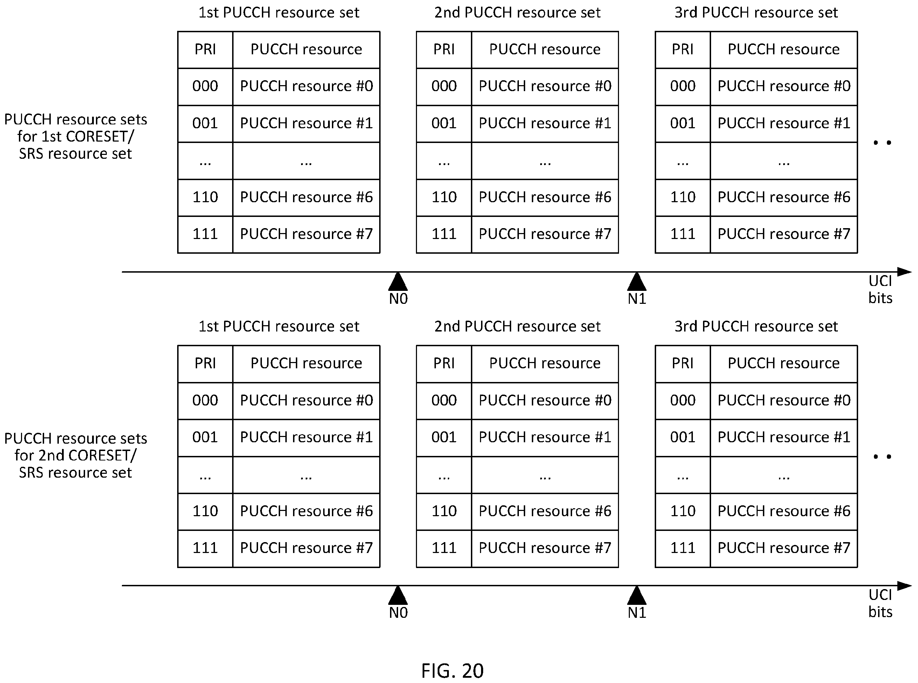

FIG. 20 is a diagram to show an example of a method for configuring the PUCCH resource according to aspect 4B-1-1. In the example shown in FIG. 20, PUCCH resource sets corresponding to a first CORESET / SRS resource set (usage = CB/NCB) and PUCCH resource sets corresponding to a second CORESET / SRS resource set (usage = CB/NCB) are configured for the UE.

Up to first value (for example, four) PUCCH resource sets corresponding to each CORESET / SRS resource set (usage = CB/NCB) may be configurable. Up to second value (for example, eight) PUCCH resources in each PUCCH resource set may be configurable. The UE selects one PUCCH resource set from the configured PUCCH resource sets, based on a payload size (number of bits) of UCI. In the example shown in FIG. 20, when the number of bits of the UCI is N0 (for example, 2) or less, the UE judges to use a first PUCCH resource set. In the example shown in FIG. 20, when the number of bits of the UCI is greater than N0 and is N1 or less, the UE judges to use a second PUCCH resource set.

In the example shown in FIG. 20, the UE determines, based on a configuration for each CORESET / SRS resource set (usage = CB/NCB), a PUCCH resource set / PUCCH resource corresponding to a CORESET / SRS resource set (usage = CB/NCB).

Note that, for the configuration of the PUCCH resource set corresponding to the first (or second) CORESET / SRS resource set (usage = CB/NCB) from among the configurations for each CORESET / SRS resource set (usage = CB/NCB), a configuration of a PUCCH resource set defined in an existing specification (for example, Rel. 15 to Rel. 17) may be used. Alternatively, for the configuration of the PUCCH resource set corresponding to the first (or second) CORESET / SRS resource set (usage = CB/NCB) from among the configurations for each CORESET / SRS resource set (usage = CB/NCB), a newly defined (for example, in Rel. 18 (or later versions)) configuration of a PUCCH resource set may be used.

For the configuration of the PUCCH resource set corresponding to the second (or first) CORESET / SRS resource set (usage = CB/NCB) from among the configurations for each CORESET / SRS resource set (usage = CB/NCB), a newly defined (for example, in Rel. 18 (or later versions)) configuration of a PUCCH resource set may be used.

### <<Option 4B-1-2>>

A PUCCH resource / PUCCH resource set / PUCCH configuration (PUCCH-Config) common to respective CORESETs / SRS resource sets (usage = CB/NCB) may be configured for the UE.

One PUCCH resource may be associated with one CORESET / SRS resource set (usage = CB/NCB). A PUCCH resource associated with one CORESET / SRS resource set (usage = CB/NCB) may be indicated for the UE. A CORESET / SRS resource set (usage = CB/NCB) may be independently associated with each PUCCH resource.

Information (flag/indicator) indicating which of indicated TCI states each PUCCH resource is associated with may be configured. For example, the information may indicate either a first TCI state or a second TCI state.

When the information is not configured, the UE may judge that the PUCCH resource is associated with a specific TCI state (for example, the first (or second) TCI state).

A feature of beam indication for each PUCCH resource group defined in Rel. 16 may be used for the association between the CORESET / SRS resource set (usage = CB/NCB) and the PUCCH resource.

For example, the UE may judge the association between the CORESET / SRS resource set (usage = CB/NCB) and the PUCCH resource in accordance with steps 1 to 3 below:
- PUCCH resources of PUCCH resource groups (for example, PUCCH resource groups 0 to 3) are configured (step 1);
- an association between the PUCCH resource group and one of the first TCI state and the second TCI state is configured (step 2); and
- when one or a plurality of (two) TCI states are indicated by using a MAC CE / DCI, a plurality of (for example, all the) PUCCH resources associated with the indicated TCI state(s) are updated (step 3).

The feature of beam indication for each PUCCH resource group defined in Rel. 16 may not be used.

In this case, an association between a PUCCH resource and one of the first TCI state and the second TCI state may be configured for the UE.

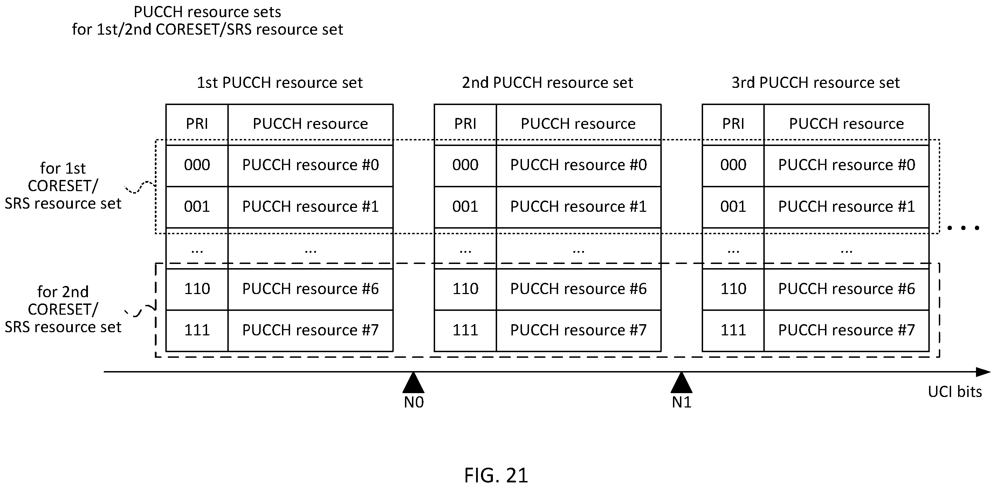

FIG. 21 is a diagram to show an example of a method for configuring the PUCCH resource according to option 4B-1-2. In the example shown in FIG. 21, a PUCCH resource set common to respective CORESETs / SRS resource sets (usage = CB/NCB) is configured for the UE. Configuration of the PUCCH resource set and the PUCCH resource is similar to that of the example shown in FIG. 20.

In the example shown in FIG. 21, the UE determines, based on a configuration of the PUCCH resource set common to the respective CORESETs / SRS resource sets (usage = CB/NCB), a PUCCH resource corresponding to a CORESET / SRS resource set (usage = CB/NCB). In the example shown in FIG. 21, PUCCH resources with PUCCH resource indicators (PRIs) of "000" to "011" and PUCCH resources with PRIs of "100" to "111," from among PUCCH resources included in the PUCCH resource set, are associated with a first CORESET / SRS resource set (usage = CB/NCB) and a second CORESET / SRS resource set (usage = CB/NCB), respectively. The UE determines, based on the association, a PUCCH resource associated with each CORESET / SRS resource set (usage = CB/NCB).

Note that, for the configuration common to the respective CORESETs / SRS resource sets (usage = CB/NCB), a configuration of a PUCCH resource set defined in an existing specification (for example, Rel. 15 to Rel. 17) may be used. Alternatively, for the configuration common to the respective CORESETs / SRS resource sets (usage = CB/NCB), a newly defined (for example, in Rel. 18 (or later versions)) configuration of a PUCCH resource set may be used.

According to option 4B-1-2, a joint TCI state / separate (UL) TCI state for a PUCCH resource can be indicated by using PUCCH resource selection using a PRI / control channel element (CCE) index.

### <<Variation 1 of Option 4B-1-2>>

A PUCCH resource / PUCCH resource set / PUCCH configuration (PUCCH-Config) common to the respective CORESETs / SRS resource sets (usage = CB/NCB) may be configured for the UE.

One PUCCH resource may be associated with one or a plurality of (two) CORESETs / SRS resource sets (usage = CB/NCB). A PUCCH resource associated with one or a plurality of (two) CORESETs / SRS resource sets (usage = CB/NCB) may be indicated for the UE.

Information (flag/indicator) indicating which of indicated TCI states one or a plurality of (for example, some / all the) PUCCH resources are associated with may be configured. For example, the information may indicate either a first TCI state or a second TCI state.

When one or a plurality of (two) TCI states are indicated by using a MAC CE / DCI, a plurality of (for example, all the) PUCCH resources associated with the indicated TCI state(s) may be updated.

When a plurality of (two) TCI states are indicated, the UE may judge to apply the plurality of indicated TCI states. This case may be applied, for example, to at least one of PUCCH repetition transmission to multi-TRP (defined in Rel. 17) or simultaneous PUCCH transmission using multi-panel (defined in Rel. 18 (or later versions)).

When a plurality of (two) TCI states are indicated, the UE may judge to apply one of the plurality of indicated TCI states. Determination of the one TCI state may be predefined in a specification, may be configured by RRC, may be indicated by a MAC CE / DCI, or may dependent on implementation of the UE. This case may be applied to PUCCH transmission other than the PUCCH repetition transmission to multi-TRP (defined in Rel. 17).

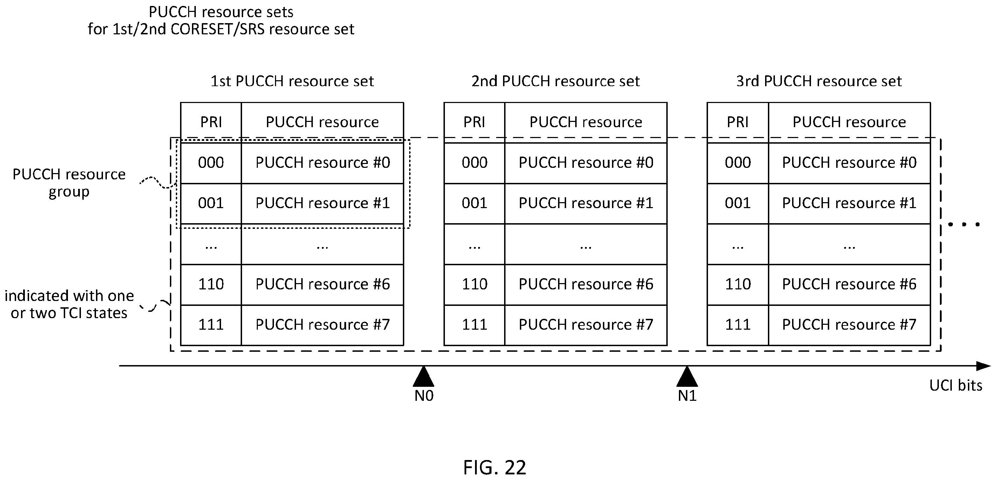

FIG. 22 is a diagram to show an example of a method for configuring the PUCCH resource according to variation 1 of option 4B-1-2. In the example shown in FIG. 22, a PUCCH resource set common to respective CORESETs / SRS resource sets (usage = CB/NCB) is configured for the UE. Configuration of the PUCCH resource set and the PUCCH resource is similar to that of the example shown in FIG. 20.

In the example shown in FIG. 22, the UE determines, based on a configuration of the PUCCH resource set common to the respective CORESETs / SRS resource sets (usage = CB/NCB), a PUCCH resource corresponding to a CORESET / SRS resource set (usage = CB/NCB).

In the example shown in FIG. 22, two TCI states are indicated for one or more specific PUCCH resources (PUCCH resource group). The UE judges to apply two TCI states for one or more specific PUCCH resources (PUCCH resource group).

In the example shown in FIG. 22, one or two TCI states are indicated for PUCCH resources other than the one or more specific PUCCH resources (PUCCH resource group). When two TCI states are indicated for these PUCCH resources, the UE judges to apply one of the TCI states, based on a specific rule.

Note that, for the configuration common to the respective CORESETs / SRS resource sets (usage = CB/NCB), a configuration of a PUCCH resource set defined in an existing specification (for example, Rel. 15 to Rel. 17) may be used. Alternatively, for the configuration common to the respective CORESETs / SRS resource sets (usage = CB/NCB), a newly defined (for example, in Rel. 18 (or later versions)) configuration of a PUCCH resource set may be used.

According to variation 1 of option 4B-1-2, a joint TCI state / separate (UL) TCI state for a PUCCH resource can be indicated by using RRC / MAC CE / DCI / specific rule.

Note that, to indicate one of the two indicated TCI states, a new DCI field may be defined, a combination of (special) DCI fields may be used, or an existing DCI field may be used. For example, an association between an index of a first indicated TCI state and an index of a second indicated TCI state, and a TCI codepoint may be configured for the UE by using RRC.

### <<Variation 2 of Option 4B-1-2>>

A PUCCH resource / PUCCH resource set / PUCCH configuration (PUCCH-Config) common to the respective CORESETs / SRS resource sets (usage = CB/NCB) may be configured for the UE.

One PUCCH resource may be associated with one or a plurality of (two) CORESETs / SRS resource sets (usage = CB/NCB). A PUCCH resource associated with one or a plurality of (two) CORESETs / SRS resource sets (usage = CB/NCB) may be indicated for the UE.

According to variation 2 of option 4B-1-2, a joint TCI state / separate (UL) TCI state for a PUCCH resource can be indicated by using RRC / MAC CE / DCI / specific rule.

An association between at least one (first parameter) of a DCI codepoint, a PUCCH resource ID, a PUCCH resource group ID, a PUCCH resource set ID, or a TCI code point of a PRI, and an index of a first indicated TCI state and an index of a second indicated TCI state may be defined.

For example, the association may be an association with which a first TCI state is applied to a PUCCH resource associated with an even-numbered (or odd-numbered) first parameter. The association may be an association with which a second TCI state is applied to a PUCCH resource associated with an odd-numbered (or even-numbered) first parameter.

The association may associate, in place of the above-described even-numbered (or odd-numbered) first parameter, the first half (lower half) of PUCCH resources (PRIs) per PUCCH resource set with the first TCI state. The association may associate, in place of the above-described odd-numbered (or even-numbered) first parameter, the first half (lower half) of PUCCH resources (PRIs) per PUCCH resource set with the second TCI state.

The UE may determine a TCI state for a PUCCH resource, based on an index related to a TRP for a scheduled PDSCH / scheduled PDCCH (DCI) in a multi-DCI based multi-TRP scenario. For example, for a PUCCH resource for a PDSCH scheduled by a PDCCH corresponding to a first value (or second value), the UE may judge to apply a first (or second) TCI state to the PUCCH resource.

The UE may not assume/expect that PRIs from a plurality of (two) TRPs indicate the same PUCCH resource in the same slot.

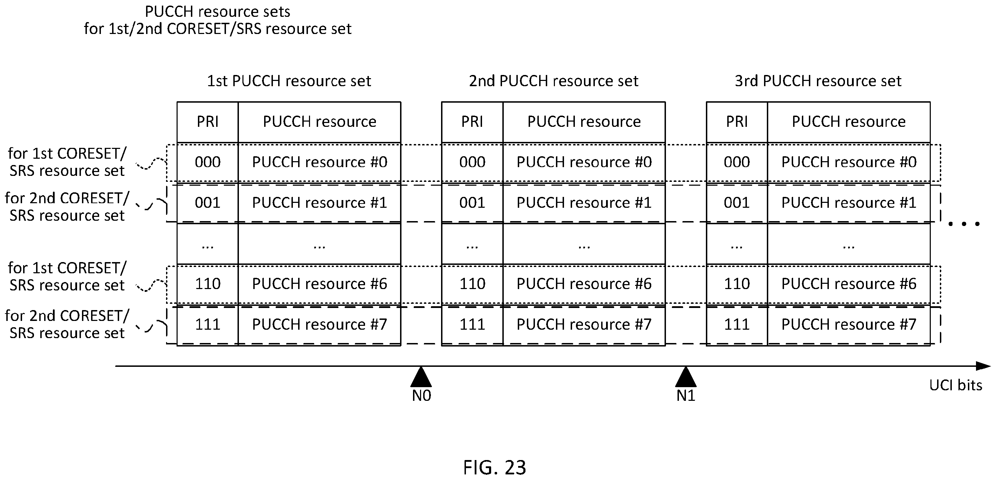

FIG. 23 is a diagram to show an example of a method for configuring the PUCCH resource according to variation 2 of option 4B-1-2. In the example shown in FIG. 23, a PUCCH resource set common to respective CORESETs / SRS resource sets (usage = CB/NCB) is configured for the UE. Configuration of the PUCCH resource set and the PUCCH resource is similar to that of the example shown in FIG. 20.

In the example shown in FIG. 23, the UE determines, based on a configuration of the PUCCH resource set common to the respective CORESETs / SRS resource sets (usage = CB/NCB), a PUCCH resource corresponding to a CORESET / SRS resource set (usage = CB/NCB).

In the example shown in FIG. 23, a first indicated TCI state and a second indicated TCI state are associated with an even-numbered PRI and an odd-numbered PRI, respectively. The association may be predefined in a specification. The UE judges, based on the association, an indicated TCI state to be applied to a PUCCH.

Note that, for the configuration common to the respective CORESETs / SRS resource sets (usage = CB/NCB), a configuration of a PUCCH resource set defined in an existing specification (for example, Rel. 15 to Rel. 17) may be used. Alternatively, for the configuration common to the respective CORESETs / SRS resource sets (usage = CB/NCB), a newly defined (for example, in Rel. 18 (or later versions)) configuration of a PUCCH resource set may be used.

### {Option 4B-2}

Different pieces of DCI associated with different CORESET pool indices may indicate different PUCCH resources. In this case, a PUCCH resource may be indicated by using a certain field included in each piece of DCI. The certain field may be a PUCCH resource indication field (for example, a PRI field).

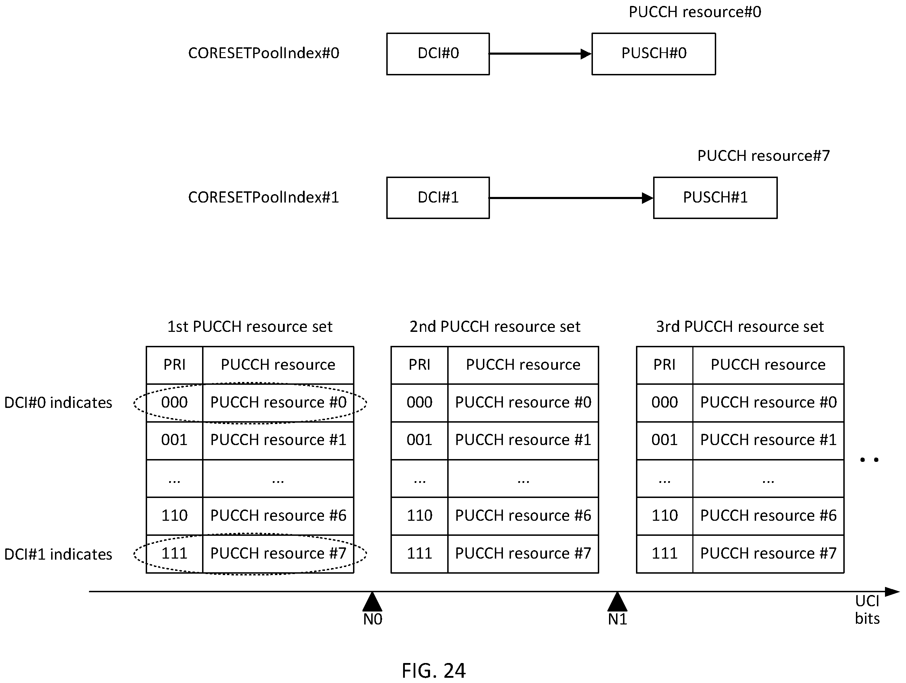

In FIG. 24, a PRI field of first DCI #0 corresponding to first CORESET pool index #0 indicates a first PUCCH resource (here, PUCCH resource #0). A PRI field of second DCI #1 corresponding to second CORESET pool index #1 indicates a second PUCCH resource (here, PUCCH resource #7).

The specification may not be enhanced when a base station is supported to indicate different spatial relations for different PUCCH resources by using RRC / MAC CE.

When option 4B-2 is applied, the RRC / MAC CE may configure/indicate an association between a CORESET pool index and each PUCCH resource / PUCCH resource group / PUCCH resource set. For example, a CORESET pool index (or TRP ID) corresponding to each PUCCH resource may be configured in a higher layer parameter related to PUCCH configuration (for example, PUCCHConfig).

Alternatively, the RRC / MAC CE may configure/indicate an association between an indicated joint/UL TCI state and a PUCCH resource / PUCCH resource group / PUCCH resource set.

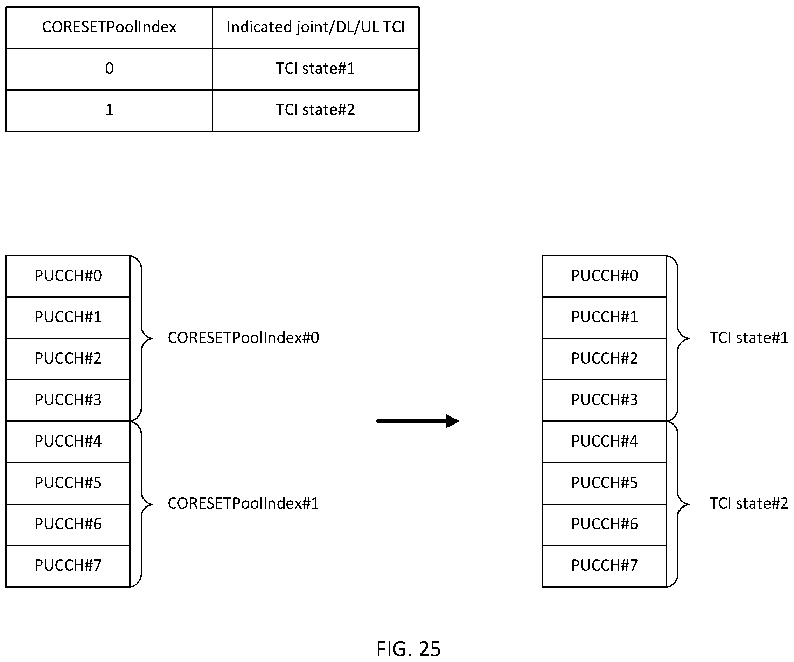

When DCI associated with a CORESET pool index indicates an indicated joint/UL TCI state, the indicated joint/UL TCI state may be applied to all the (or some) PUCCH resources (or all the PUCCH resources of a PUCCH resource group) (see FIG. 25).

FIG. 25 assumes a case where indicated joint/UL TCI state #1 (first TCI state) and indicated joint/UL TCI state #2 (second TCI state) correspond to first CORESET #0 and second CORESET #1, respectively. In this case, first TCI state #1 and second TCI state #1 may be indicated by a PDCCH/DCI transmitted with first CORESET pool index #0 and a PDCCH/DCI transmitted with second CORESET pool index #1, respectively.

FIG. 25 shows a case where the RRC / MAC CE configures/indicates an association between PUCCH resources and a CORESET pool index. FIG. 25 shows a case where first CORESET pool index #0 and second CORESET pool index #1 are associated with PUCCH resources #0 to #3 and PUCCH resources #4 to #7, respectively.

The UE may receive information related to an association between a CORESET pool index and PUCCH resources via an RRC parameter / MAC CE. When PUCCH resources #0 to #3 are indicated, the UE uses first TCI state #1 to perform PUCCH transmission. When PUCCH resources #4 to #7 are indicated, the UE uses second TCI state #2 to perform PUCCH transmission.

Note that DCI corresponding to first CORESET #0 and DCI corresponding to second CORESET #1 may indicate one of PUCCH resources #0 to #3 and one of PUCCH resources #4 to #7, respectively. Alternatively, DCI corresponding to first CORESET #0 and DCI corresponding to second CORESET #1 may indicate one of PUCCH resources #0 to #7 and one of PUCCH resources #0 to #7, respectively.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting unified TCI in single-DCI based multi-TRP;
- supporting joint TCI / separate TCI;
- supporting a plurality of (for example, two) timing advances;
- supporting simultaneous UL transmission (for example, STxMP); and
- indicated TCI being applied to a PDSCH associated with a CORESET with a CSS.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of switching between a single TRP and multi-TRP in a case where a unified TCI state is used, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Note)

Regarding one embodiment of the present disclosure, the following supplementary notes of the invention will be given.

### {Supplementary Note 1}

A terminal including: a receiving section that receives information indicating a unified transmission configuration indication (TCI) state and one piece of downlink control information indicating a plurality of UL transmissions; and a control section that determines a unified TCI state to be applied to the plurality of UL transmissions, based on at least one of information indicated by the downlink control information, a transmission/reception point (TRP) index corresponding to the UL transmission, and a control resource set pool index corresponding to the UL transmission.

### {Supplementary Note 2}

The terminal according to supplementary note **1,** wherein when a plurality of sounding reference signal (SRS) resource sets are configured, the control section determines the unified TCI state to be applied to the plurality of UL transmissions, based on at least one of an SRS resource set and an SRS resource corresponding to each UL transmission.

### {Supplementary Note 3}

The terminal according to supplementary note 1 or **2,** wherein the control section judges, based on the downlink control information, at least one of an SRS resource set and an SRS resource corresponding to each UL transmission.

### {Supplementary Note 4}

The terminal according to any one of supplementary notes 1 to **3,** wherein when a plurality of unified TCI states are indicated, the control section applies different unified TCI states to a plurality of SRS resource sets or a plurality of SRS resources included in a same SRS resource set.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

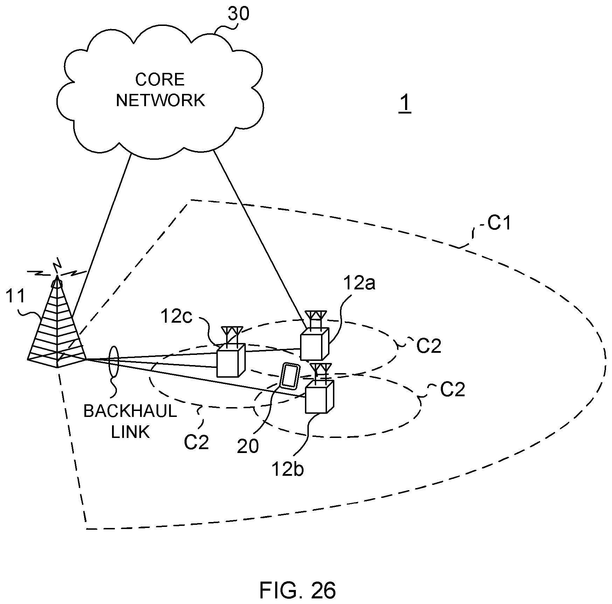

FIG. 26 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) or a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) or frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), or the like.

The core network 30 may include network functions (NF), such as a User Plane Function (UPF), an Access and Mobility management Function (AMF), a Session Management Function (SMF), Unified Data Management (UDM), an ApplicationFunction (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) or the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH or the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), or scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) or a secondary synchronization signal (SSS). A signal block including an SS (PSS, SSS) and a PBCH (and a DMRS for a PBCH) may be referred to as an "SS/PBCH block," an "SS Block **(SSB),"** and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

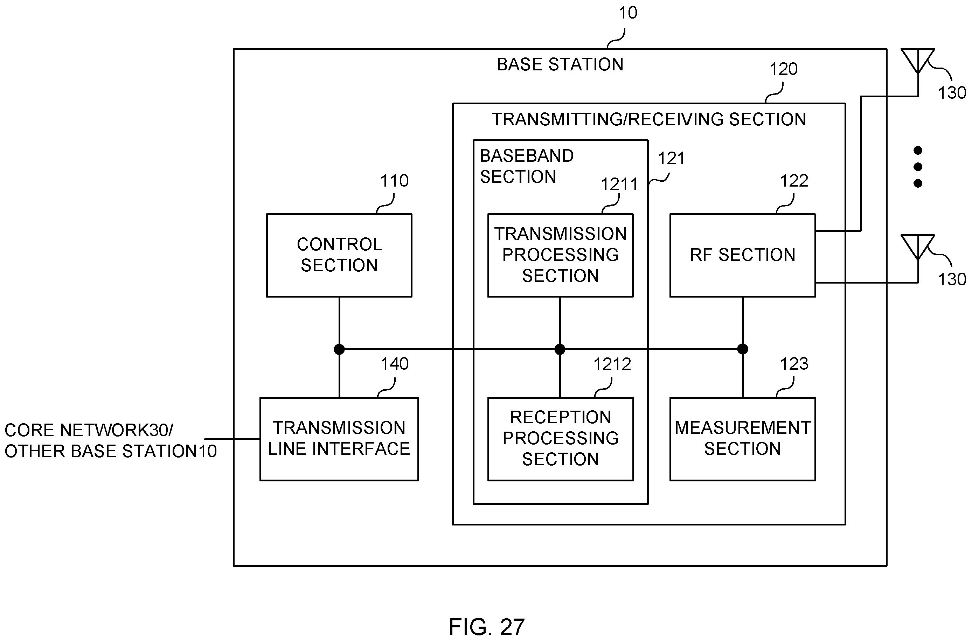

FIG. 27 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information indicating a unified transmission configuration indication (TCI) state and one piece of downlink control information indicating a plurality of UL transmissions.

The control section 110 may indicate a unified TCI state to be applied to the plurality of UL transmissions, by using at least one of information indicated by the downlink control information, a transmission/reception point (TRP) index corresponding to the UL transmission, and a control resource set pool index corresponding to the UL transmission.

### (User Terminal)

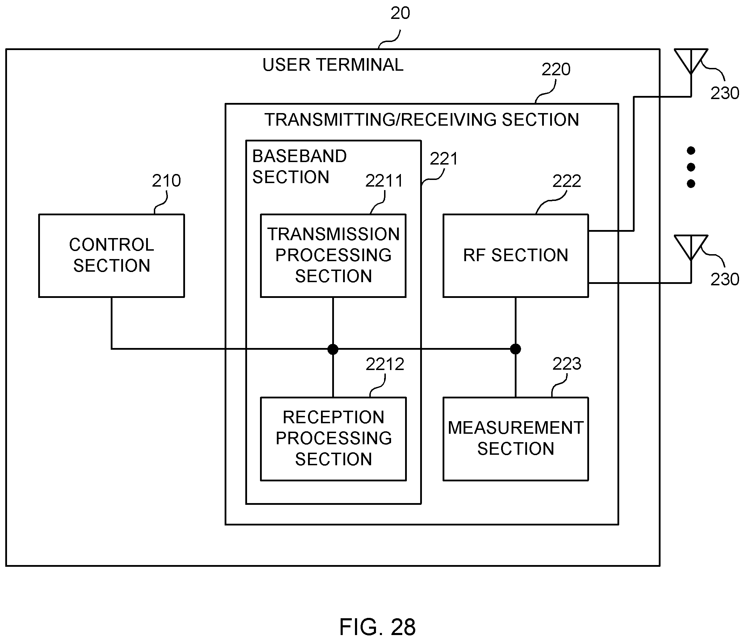

FIG. 28 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information indicating a unified transmission configuration indication (TCI) state and one piece of downlink control information indicating a plurality of UL transmissions.

The control section 210 may determine a unified TCI state to be applied to the plurality of UL transmissions, based on at least one of information indicated by the downlink control information, a transmission/reception point (TRP) index corresponding to the UL transmission, and a control resource set pool index corresponding to the UL transmission.

When a plurality of sounding reference signal (SRS) resource sets are configured, the control section 210 may determine a unified TCI state to be applied to the plurality of UL transmissions, based on at least one of an SRS resource set and an SRS resource corresponding to each UL transmission.

The control section 210 may judge, based on the downlink control information, at least one of an SRS resource set and an SRS resource corresponding to each UL transmission.

When a plurality of unified TCI states are indicated, the control section 210 may apply different unified TCI states to a plurality of SRS resource sets or a plurality of SRS resources included in a same SRS resource set.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

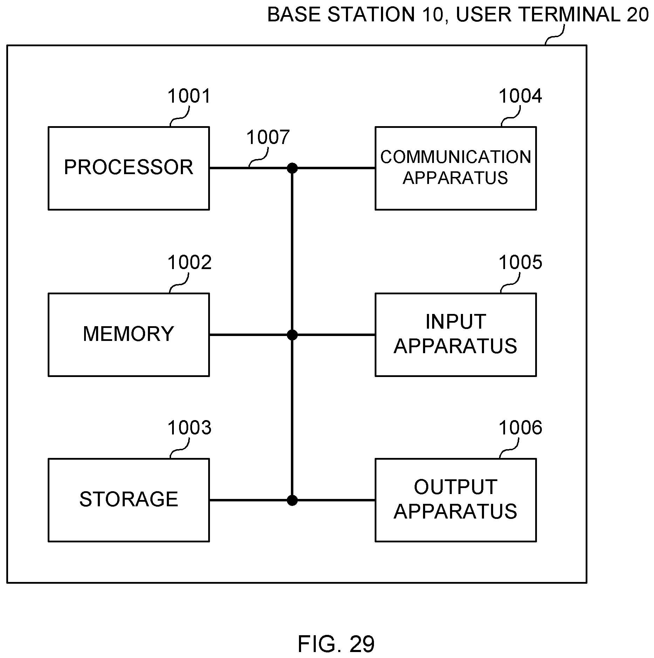

For example, a base station, a user terminal, and so on according to one embodiment of the present disclosure may function as a computer that executes the processes of the radio communication method of the present disclosure. FIG. 29 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

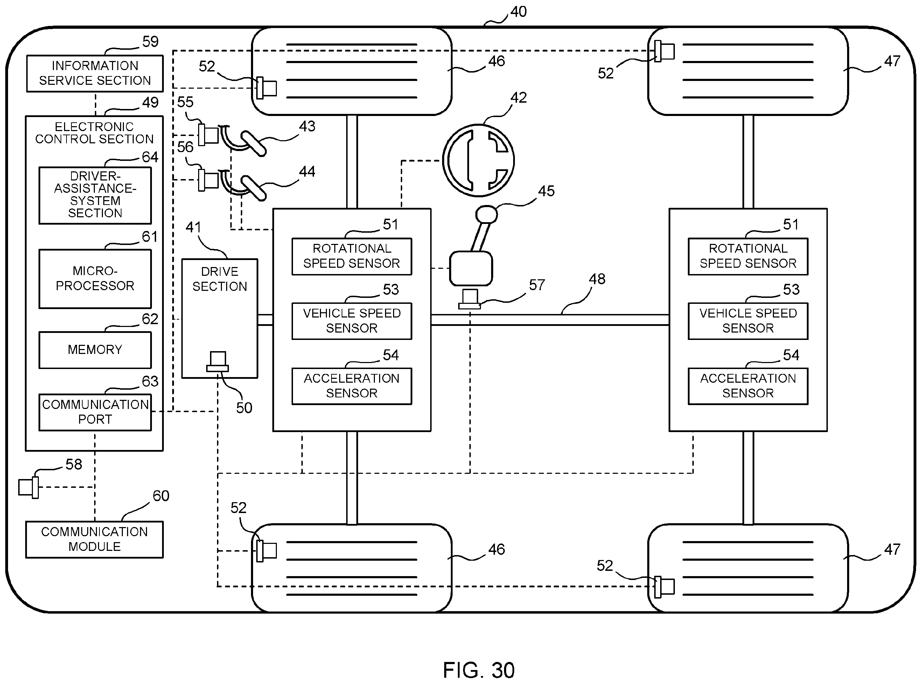

FIG. 30 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

This application is based on and claims priority to Japanese Patent Application No. 2022-182134, filed on November 14, 2022, the contents of which are incorporated herein by reference in their entirety.

## Claims

1. A terminal comprising:
a receiving section that receives information indicating a unified transmission configuration indication (TCI) state and one piece of downlink control information indicating a plurality of UL transmissions; and
a control section that determines a unified TCI state to be applied to the plurality of UL transmissions, based on at least one of information indicated by the downlink control information, a transmission/reception point (TRP) index corresponding to the UL transmission, and a control resource set pool index corresponding to the UL transmission.

2. The terminal according to claim 1, wherein
when a plurality of sounding reference signal (SRS) resource sets are configured, the control section determines the unified TCI state to be applied to the plurality of UL transmissions, based on at least one of an SRS resource set and an SRS resource corresponding to each UL transmission.

3. The terminal according to claim 1, wherein
the control section judges, based on the downlink control information, at least one of an SRS resource set and an SRS resource corresponding to each UL transmission.

4. The terminal according to claim 1, wherein
when a plurality of unified TCI states are indicated, the control section applies different unified TCI states to a plurality of SRS resource sets or a plurality of SRS resources included in a same SRS resource set.

5. A radio communication method for a terminal, the radio communication method comprising:
receiving information indicating a unified transmission configuration indication (TCI) state and one piece of downlink control information indicating a plurality of UL transmissions; and
determining a unified TCI state to be applied to the plurality of UL transmissions, based on at least one of information indicated by the downlink control information, a transmission/reception point (TRP) index corresponding to the UL transmission, and a control resource set pool index corresponding to the UL transmission.

6. A base station comprising:
a transmitting section that transmits information indicating a unified transmission configuration indication (TCI) state and one piece of downlink control information indicating a plurality of UL transmissions; and
a control section that indicates a unified TCI state to be applied to the plurality of UL transmissions, by using at least one of information indicated by the downlink control information, a transmission/reception point (TRP) index corresponding to the UL transmission, and a control resource set pool index corresponding to the UL transmission.
